# EUROPEAN PATENT SPECIFICATION

(11) **EP 4 412 229 B1**
(45) Date of publication and mention of the grant of the patent: **04.02.2026**
(21) Application number: 22916566.7
(22) Date of filing: 15.12.2022
(51) Int. Cl.: G06F 9/451, H04N 21/485, H04N 21/466, G06F 3/04842, G06F 3/0481, G06N 3/08, G06N 3/04, G06F 3/0482, G06F 8/38

(54) **ELECTRONIC APPARATUS FOR ANALYZING APPLICATION SCREEN, AND OPERATING METHOD THEREFOR**
ELEKTRONISCHE VORRICHTUNG ZUR ANALYSE EINES ANWENDUNGSBILDSCHIRMS UND BETRIEBSVERFAHREN DAFÜR
APPAREIL ÉLECTRONIQUE D'ANALYSE D'ÉCRAN D'APPLICATION ET SON PROCÉDÉ DE FONCTIONNEMENT

(30) Priority: 29.12.2021 KR 20210191653; 23.09.2022 KR 20220121152
(43) Date of publication of application: 07.08.2024
(73) Proprietor: Samsung Electronics Co., Ltd., Suwon-si, Gyeonggi-do 16677 (KR)
(72) Inventor: KWON, Jungmin, Suwon-si, Gyeonggi-do 16677 (KR); PARK, Chiyoun, Suwon-si, Gyeonggi-do 16677 (KR); KANG, Byeongcheol, Suwon-si, Gyeonggi-do 16677 (KR); PARK, Hyunseo, Suwon-si, Gyeonggi-do 16677 (KR); SOHN, Youngchul, Suwon-si, Gyeonggi-do 16677 (KR); SONG, Juyong, Suwon-si, Gyeonggi-do 16677 (KR)
(74) Representative: Gulde & Partner
(86) International application number: PCT/KR2022/020494
(87) International publication number: WO 2023/128424

(56) References cited:
- KR-A- 20040 066 222
- KR-A- 20140 017 429
- KR-B1- 101 752 355
- KR-B1- 102 340 231
- US-A1- 2018 157 386
- US-A1- 2021 397 942
- "Data Mining and Knowledge Discovery Handbook (Second Edition)", 1 January 2010, SPRINGER SCIENCE+BUSINESS MEDIA, ISBN: 978-0-38-709822-7, article LIOR ROKACH ET AL: "Chapter 15 CLUSTERING METHODS", pages: 321 - 352, XP055210183, DOI: 10.1007/978-0-387-09823-4
- ANONYMOUS: "Create TV Navigation | Android Developer | Android Developers", 12 June 2020 (2020-06-12), XP093075982, Retrieved from the Internet <URL:https://developer.android.com/training/tv/start/navigation?hl=ko>

## Description

### TECHNICAL FIELD

The disclosure relates to an electronic device for analyzing an application screen, and an operation method of the electronic device.

### BACKGROUND ART

Examples of various electronic devices including a display include a television (TV), a signage board, a kiosk, and the like. Various applications may be displayed on an electronic device including a display.

A user of the electronic device may navigate an application screen in order to receive a specific function or service of an application desired by the user. The navigation of the application screen may be performed based on a combination of primitive actions.

In order to successfully navigate the application screen, it is necessary to ascertain, in advance, how a plurality of user interface elements included in the application screen are connected to one another and where a focus is located on a current application screen.

Patent application US2021/397942A1 is part of prior art of the present invention.

### DESCRIPTION OF EMBODIMENTS

### SOLUTION TO PROBLEM

Aspects of the disclosure are to address at least the above-mentioned problems and/or disadvantages and to provide at least the advantages described below. Accordingly, an aspect of the disclosure is to provide an electronic device for analyzing an application screen, and an operation method of the electronic device.

Additional aspects will be set forth in part in the description which follows and, in part, will be apparent from the description, or may be learned by practice of the presented embodiments.

In accordance with an embodiment of the disclosure, a method of analyzing an application screen is provided. According to an embodiment of the disclosure, the method includes generating a plurality of links for a plurality of user interface (UI) elements included in the application screen. According to an embodiment of the disclosure, the method of analyzing the application screen mayinclude generating a UI map for each of at least one primitive action, which is a user input for navigating the application screen, based on the plurality of links, and identifying a position of a focus indicating a UI element with which a user is to interact among the plurality of UI elements. The UI map may include a route through which the position of the focus moves between the plurality of UI elements by the at least one primitive action.

In accordance an embodiment of the disclosure, an electronic device for analyzing an application screen is provided. The electronic device includes a memory storing one or more instructions, and at least one processor configured to execute at least one instruction stored in the memory. According to an embodiment of the disclosure, the at least one processor may be further configured to generate a plurality of links for a plurality of UI elements included in the application screen. According to an embodiment of the disclosure, the at least one processor may be further configured to generate a UI map for each of at least one primitive action that is a user input for navigating the application screen, based on the plurality of links. According to an embodiment of the disclosure, the at least one processor may be further configured to identify the position of a focus indicating a UI element with which a user is to interact among the plurality of UI elements. According to an embodiment of the disclosure, the UI map may include a route through which the position of the focus moves between the plurality of UI elements by the at least one primitive action.

In accordance with an embodiment of the disclosure, a non-transitory computer-readable recording medium having recorded thereon a computer program, which, when executed by a computer, performs at least one of the above-disclosed methods of analyzing the application screen is provided.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 is a view for explaining a method, performed by an electronic device of navigating an application screen according to an embodiment of the disclosure;
FIG. 2 is a flowchart of a method, performed by an electronic device of analyzing an application screen according to an embodiment of the disclosure;
FIG. 3A is a diagram for describing applications and sources related to control by an electronic device according to an embodiment of the disclosure;
FIG. 3B is a diagram for describing an operation, performed by an electronic device, of controlling applications and sources described above with reference to FIG. 3A, based on a primitive action, according to an embodiment of the disclosure;
FIGS. 4A and 4B are diagrams for explaining a control operation of an electronic device according to various embodiments of the disclosure;
FIGS. 5A, 5B, and 5C are diagrams for explaining an operation, performed by an electronic device of generating an edge by using an edge generator according to various embodiments of the disclosure;
FIG. 6 is a diagram for explaining an operation, performed by an electronic device of generating a user interface (UI) map by using an edge labeler according to an embodiment of the disclosure;
FIGS. 7A, 7B, and 7C are diagrams for explaining an operation, performed by an electronic device of identifying a position of a focus by using a focus position estimator according to various embodiments of the disclosure;
FIGS. 8A, 8B, 8C, and 8D are diagrams for explaining a method, performed by an electronic device of analyzing an application screen according to various embodiments of the disclosure;
FIG. 9 is a block diagram of an electronic device according to an embodiment of the disclosure; and
FIG. 10 is a block diagram of a server according to an embodiment of the disclosure.

The same reference numerals are used to represent the same elements throughout the drawings.

### MODE OF DISCLOSURE

The following description with reference to the accompanying drawings is provided to assist in a comprehensive understanding of various embodiments of the disclosure as defined by the claims . It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Throughout the disclosure, the expression "at least one of a, b or c" indicates only a, only b, only c, both a and b, both a and c, both b and c, all of a, b, and c, or variations thereof.

As the disclosure allows for various changes and numerous embodiments, particular embodiments will be illustrated in the drawings and described in detail in the written description. However, this is not intended to limit the disclosure to particular modes of practice, and it is to be appreciated that all changes, equivalents, and substitutes that do not depart from the spirit and technical scope of the disclosure are encompassed in the disclosure.

In the description of embodiments of the disclosure, certain detailed explanations of the related art are omitted when it is deemed that they may unnecessarily obscure the essence of the disclosure. While such terms as "first," "second, "etc., may be used to describe various components, such components must not be limited to the above terms. The above terms are used only to distinguish one component from another.

When an element (e.g., a first element) is "coupled to" or "connected to" another element (e.g., a second element), the first element may be directly coupled to or connected to the second element, or, unless otherwise described, a third element may exist therebetween.

Regarding a component represented as a "portion (unit)" or a "module" used herein, two or more components may be combined into one component or one component may be divided into two or more components according to subdivided functions. In addition, each component described hereinafter may additionally perform some or all of functions performed by another component, in addition to main functions of itself, and some of the main functions of each component may be performed entirely by another component.

A 'model' and an 'artificial intelligence (AI) model' used herein may refer to a model set to perform desired characteristics (or a purpose) by being trained using a plurality of training data by a learning algorithm. Examples of the learning algorithm include, but are not limited to, supervised learning, unsupervised learning, semi-supervised learning, or reinforcement learning.

A 'model' and an 'AI model' used herein may be composed of a plurality of neural network layers. Each of the plurality of neural network layers may have a plurality of weight values, and may perform a neural network operation through an operation between an operation result of a previous layer and the plurality of weight values. The plurality of weight values of the plurality of neural network layers may be optimized by a learning result of the AI model. For example, the plurality of weight values may be updated so that a loss value or a cost value obtained from the AI model is reduced or minimized during a learning process. Examples of the AI model including a plurality of neural network layers may include, but are not limited to, a deep neural network (DNN), for example, a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), and Deep Q-Networks.

A 'user interface (UI) element' used herein may refer to a virtual medium through which a specific function of an application is performed by interaction with a user, such as the user's selection on an application screen. The UI element may include at least one of an icon, an image, text, or an input field. However, the UI element is not necessarily limited thereto, and may include all elements capable of interacting with the user included in the application screen.

'Navigation' used herein may refer to a process of accessing at least one of a specific function or a specific service provided by an application by interacting with a UI element of an application screen.

A 'third-party application' used herein may refer to an application produced and distributed by a company other than a manufacturer of an electronic device in which the application is executed or an operating system (OS) of the electronic device. The third-party application may be an application installed inside the electronic device or an application installed in an external source (e.g., a game console or a set-top box) connected to the electronic device.

A 'primitive action' used herein may refer to a user input for navigating an application screen. An electronic device or the OS of the electronic device may transmit a primitive action to an application to navigate an application screen. The primitive action may be a user input that may be provided to an application without passing through an application program interface (API). Examples of the primitive action may include, but are not limited to, 'Move Up', 'Move Down', 'Move Left', 'Move Right', 'Go Back', 'Go Home', and Select Click', and may include any user input that may be provided to an application without passing through an API.

'Focus' used herein may refer to indication of an object (or an area) interacting with a user in an application. When a focus is placed on a particular UI element, the user may interact with a UI element on which the focus is placed. The UI element on which the focus is placed may include visual indications that allow a user to recognize that the focus has been placed on the UI element.

A 'Link' used herein may refer to at least one of a connection between different UI elements or a connection of a UI element to itself.

A 'UI map' used herein may refer to information on how a plurality of UI elements included in an application screen are connected to one another and what kind of primitive action is necessary for moving the focus according to the connection.

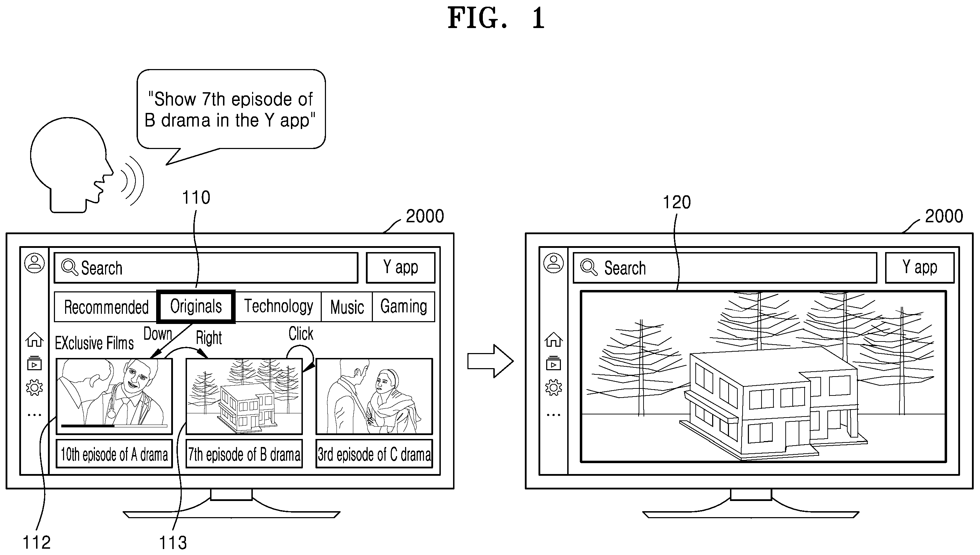

FIG. 1 is a view for explaining a method, performed by an electronic device of navigating an application screen according to an embodiment of the disclosure.

Referring to FIG. 1, an electronic device 2000 according to an embodiment of the disclosure may include a display to output at least one of an image or a moving picture. Examples of the electronic device 2000 may include, but are not limited to, a smart TV, a smartphone, signage board, a kiosk, a tablet personal computer (PC), a laptop PC, and a frame-type display, and the electronic device 2000 may be implemented as any of various types or in various shapes including displays.

According to an embodiment of the disclosure, the electronic device 2000 may navigate an application screen, based on a user input. For example, the electronic device 2000 is currently executing a Y application, which is a current video application, and may receive a user input "Show 7^{th} episode of B drama in the Y app" in the form of a voice signal or a user input of selecting a thumbnail image 113 of B drama's episode 7 through at least one of a touch or a separate pointer manipulation. The electronic device 2000 may display a playback screen 120 of B drama's episode 7 by navigating the Y application, based on the received user input.

According to an embodiment of the disclosure, applications executed by the electronic device 2000 may be classified into system applications that are directly controlled by an OS of the electronic device 2000, and third-party applications that are controlled by the OS of the electronic device 2000 through an API.

According to an embodiment of the disclosure, the electronic device 2000 may request at least one of a specific function or a service from a third-party application through the API, and the third-party application may execute the at least one of the specific function or the service in response to the request.

According to an embodiment of the disclosure, an API of a third-party application may not be provided, or may not be callable by the electronic device 2000. In this case, the electronic device 2000 may provide only a primitive action to an electronic device, and is unable to directly request a third-party application for at least one of a function or service that may be requested through an AIP. Instead, the electronic device 2000 may navigate an application screen, based on the primitive action, and may indirectly request the at least one of the function or the service from the third-party application. Accordingly, the third-party application may indirectly execute the at least one of the requested function or the service by performing an operation corresponding to the primitive action provided by the electronic device 2000.

According to another embodiment of the disclosure, when navigating the application screen, based on the primitive action, the electronic device 2000 may navigate an application, based on a UI map and the position of a focus. The UI map may include a route through which the position of the focus moves between a plurality of UI elements by at least one primitive action.

For example, it is assumed that the Y application currently being executed in the electronic device 2000 of FIG. 1 is a third-party application and an API of the Y application is not provided to the OS of the electronic device 2000. In order for the OS of the electronic device 2000 to receive at least one of a function or a service corresponding to "Show the 7^{th} episode of the B drama in the Y app "from the Y application, the Y application needs to be navigated using only the primitive action. In this case, the electronic device 2000 may plan to navigate a Y application screen on which the location of a current focus is an original tab 111 and which is for selecting the thumbnail image 113 of the B drama's episode 7, based on the UI map including the route through which the focus location moves by the primitive action. Accordingly, in response to receiving the user input "Show me the 7^{th} episode of the B drama in the Y app", the electronic device 2000 may provide corresponding primitive actions "Move Down", "Move Right", and "Select Click" to the third-party application, and the third-party application may provide the electronic device 2000 with the playback screen 120 of the B drama's 7th episode by performing operations corresponding to received primitive actions.

As such, in order for the electronic device 2000 to navigate a third-party application not provided with an API, it is important to identify a UI map and a focus position.

Accordingly, the electronic device 2000 according to various embodiments of the disclosure may generate a plurality of links for the plurality of UI elements included in the application screen. The electronic device 2000 may generate a UI map for at least one primitive action that is a user input for navigating the application screen, based on the plurality of links. The electronic device 2000 may identify the position of the focus indicating a UI element with which the user is to interact among the plurality of UI elements.

As described above, the electronic device 2000 according to various embodiments of the disclosure may generate the UI map, and identify the position of the focus from the application screen to plan to navigate the application screen. Accordingly, the user may feel a better application use experience by being provided with at least one of a function or a service corresponding to a user input even in an environment in which an API is not supported.

Operations, performed by the electronic device 2000, generating the UI map and identifying the focus position will now be described in detail with reference to the drawings to be described later.

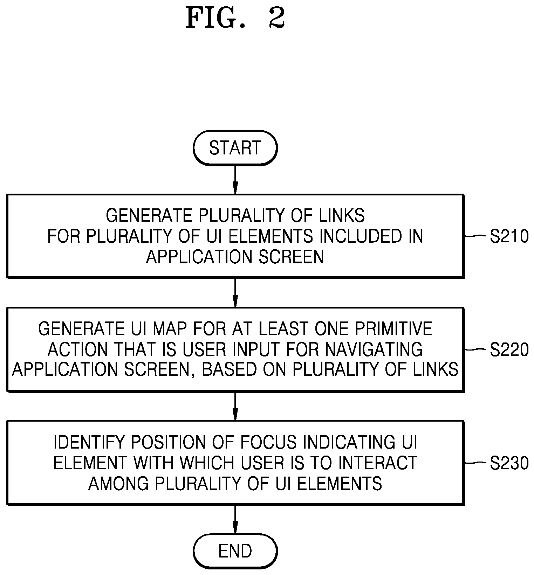

FIG. 2 is a flowchart of a method, performed by an electronic device of analyzing an application screen according to an embodiment of the disclosure.

Referring to FIG. 2, in operation S210, the electronic device 2000 may generate a plurality of links for a plurality of UI elements included in the application screen.

According to an embodiment of the disclosure, the application screen may include an execution screen of a third-party application. The application screen may include an execution screen of a third-party application executed in at least one of the electronic device 2000 or an execution screen of a third-party application received from an external electronic device.

According to an embodiment of the disclosure, the application screen may be an application screen for each of a plurality of time points distinguished based on a time point at which at least one primitive action is performed. For example, the application screen may include an application screen at a first time point, an application screen at a second time point which is a next time point when a first primitive action is performed on the application screen at the first time point, and an application screen at a third time point which is a next time point when a second primitive action is performed on the application screen at the second time point.

According to an embodiment of the disclosure, the application screens may be screens included in an application screen history. The application screen history may include screens displayed on the electronic device 2000 or displayed on an external electronic device.

According to an embodiment of the disclosure, the application screen history may include a plurality of application screens stored at predetermined time intervals and a plurality of application screens stored every time a primitive action is performed.

According to an embodiment of the disclosure, the at least one primitive action serving as a basis for distinguishing the respective application screens for the plurality of time points may be a primitive action included in a primitive action history.

According to an embodiment of the disclosure, the primitive action history may include information about a plurality of primitive actions performed before. The plurality of primitive actions performed before may refer to primitive actions transmitted to a third-party application. For example, the primitive action history may include information about what primitive actions have been performed, and how the position of the focus has been moved by the performed primitive actions.

According to an embodiment of the disclosure, the application screen history and the primitive action history may have a mapping relationship therebetween. In detail, each of the primitive actions included in the primitive action history may be mapped to each of the application screens right after the primitive actions are performed, which are included in the application screen history.

According to an embodiment of the disclosure, the electronic device 2000 may identify the plurality of UI elements, based on the application screen. The electronic device 2000 may generate a plurality of nodes corresponding to the identified plurality of UI elements. The electronic device 2000 may generate an edge for a plurality of nodes corresponding to the plurality of links. The plurality of nodes may refer to the vertexes of graph data. The edge may include a link for a node itself and a link between different nodes, and a link included in the edge may correspond to a link for a plurality of UI elements corresponding to the plurality of nodes.

According to an embodiment of the disclosure, the electronic device 2000 may extract a node feature for use in generating links from the plurality of UI elements. The node feature may include at least one of features regarding sizes, content, images, names, and hierarchy of the plurality of UI elements. However, the features included in the node feature are not necessarily limited thereto, and may include all features that may be used to generate a link from UI elements.

According to an embodiment of the disclosure, the electronic device 2000 may generate the plurality of links for the plurality of UI elements by connecting each of the identified plurality of user interface elements to themselves and/or by connecting between different identified user interface elements.

In operation S220, the electronic device 2000 may generate a UI map for at least one primitive action that is a user input for navigating the application screen, based on the plurality of links.

According to an embodiment of the disclosure, the electronic device 2000 may generate a UI map for each of the at least one primitive action, based on the plurality of links. The electronic device 2000 may map the at least one primitive action for each of the plurality of links, and may generate a UI map including a route via which a focus moves between the plurality of UI elements by the primitive action, based on what primitive action is mapped to each of the plurality of links.

Referring again to FIG. 1, the electronic device 2000 may map a primitive action 'Move Down - Move UP' to a link where a UI element 'original tab 110' is connected to a UI element 'A drama's episode 10 thumbnail image 112'. In this case, the electronic device 2000 may generate a UI map including a route where a focus positioned on the 'original tab 110' is moved to the 'A drama's episode 10 thumbnail image 112' by the primitive action 'Move Down' and the focus positioned on the 'A drama's episode 10 thumbnail image 112' is moved to the 'original tab 110' by the primitive action 'Move UP'.

In operation S230, the electronic device 2000 identifies the position of the focus indicating a UI element with which the user is to interact among the plurality of UI elements.

According to an embodiment of the disclosure, the electronic device 2000 may identify the position of the focus from an application screen at a last time point, based on the respective application screens for the plurality of time points distinguished based on the time point when the at least one primitive action has been performed and at least one primitive action performed before the last time point among the plurality of time points.

According to an embodiment of the disclosure, the electronic device 2000 may extract a focus feature from the plurality of UI elements included in the application screen. The electronic device 2000 may identify the position of the focus from the application screen, based on the extracted focus feature.

According to an embodiment of the disclosure, the focus feature may include features associated with a focus position obtainable from a UI. For example, the focus feature may include a feature indicated by visual indications allowing the user to recognize that a focus is placed on a UI element, such as outlining, in bold, of a focused UI element or changing of the color of the UI element.

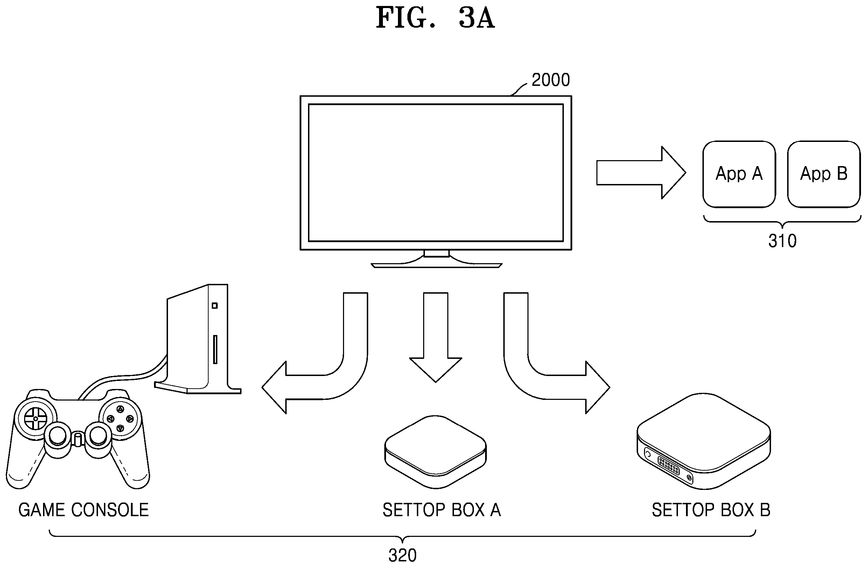

FIG. 3A is a diagram for describing applications and sources related to control by an electronic device according to an embodiment of the disclosure.

Referring to FIG. 3A, the electronic device 2000 may obtain a user input for control by the electronic device 2000 (e.g., screen control) from a user, and execute a control command corresponding to the user input.

According to an embodiment of the disclosure, third-party applications 310 may be executed by the electronic device 2000. For example, the third-party applications 310 executed by the electronic device 2000 may be, for example, an over-the-top (OTT) media service application, a video application, a game application, and the like, but are not limited thereto.

According to an embodiment of the disclosure, external sources 320 may be connected to the electronic device 2000 to be used. The external sources 320 may include devices that are connected to the electronic device 2000 in at least one of a wired or a wireless manner to provide content to the electronic device 2000. When the external sources 320 are connected to the electronic device 2000, the external sources 320 may provide the electronic device 2000 with content, media, applications, and the like. For example, the external sources 320 may include a game console, a set-top box, a desktop PC, a laptop PC, and the like, but are not limited thereto.

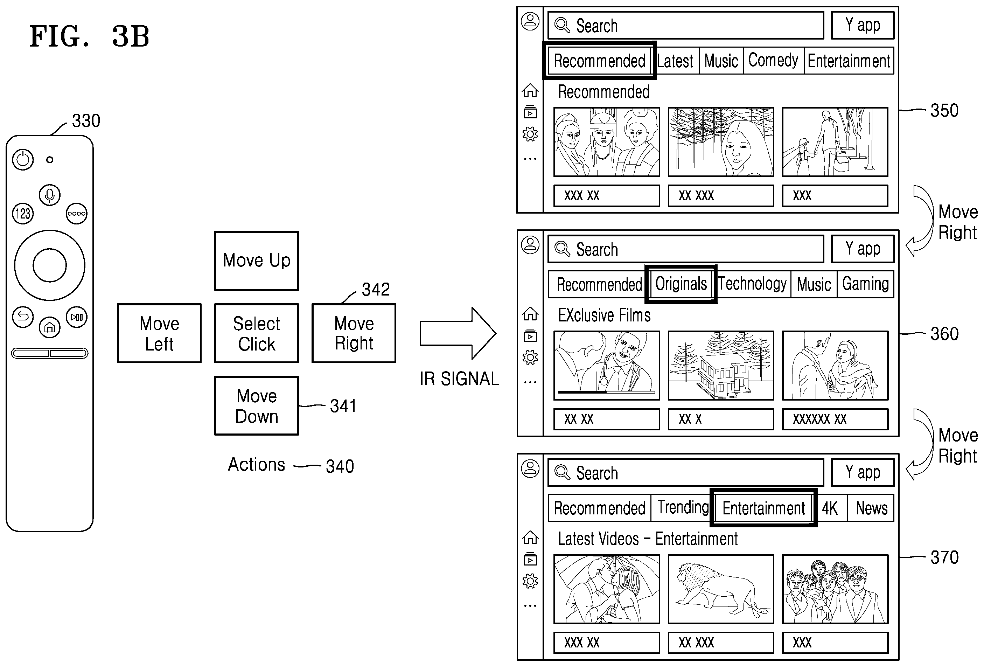

The electronic device 2000 according to an embodiment of the disclosure may control at least one of an arbitrary application or a device. A case in which the user of the electronic device 2000 generally controls the at least one of the arbitrary application or the device will now be described with reference to FIG. 3B.

FIG. 3B is a diagram for describing an operation, performed by an electronic device, of controlling the applications and sources described above with reference to FIG. 3A, based on a primitive action, according to an embodiment of the disclosure.

Referring to FIG. 3B, the electronic device 2000 may display an execution screen of a third-party application that is not provided with an API or is uncallable. In this case, the electronic device 2000 may control the third-party application and the sources, based on the primitive action.

According to an embodiment of the disclosure, the electronic device 2000 may receive the primitive action from a user input device. The user input device may include a remote controller 330, and the electronic device 2000 may receive the primitive action from the remote controller 330. The remote controller 330 may include a plurality of buttons, and some of the plurality of buttons may respectively correspond to primitive actions 340. The user may input primitive actions to the electronic device 2000 via the plurality of buttons corresponding to the primitive actions 340 of the remote controller 330. In the above-described example, the user input device has been described as being the remote controller 330. However, embodiments of the disclosure are not limited thereto, and the user input device may include any device capable of transmitting, to the electronic device 2000, information indicating that a primitive action has been selected.

According to an embodiment of the disclosure, the electronic device 2000 may navigate a third-party application, based on the primitive action received from the user input device.

For example, when a first execution screen 350 of the Y application is displayed on the electronic device 2000 and the user selects a button 341 corresponding to the primitive action 'Move Down' of the remote controller 330, the remote controller 330 may transmit, to the electronic device 2000, information indicating that the primitive action 'Move Down' has been selected. The electronic device 2000 may transmit the received primitive action 'Move Down' to the Y application, and the Y application may transmit, to the electronic device 2000, a second execution screen 360 on which the position of the focus has moved from the first execution screen 350. Accordingly, the second execution screen 360 may be displayed on the electronic device 2000. In this manner, when the user selects a button 342 corresponding to the primitive action 'Move Right' of the remote controller 330 from the second execution screen 360, the electronic device 2000 may display a third execution screen 370.

According to an embodiment of the disclosure, the electronic device 2000 may include a plurality of third-party application screens displayed on the electronic device 2000 in the application screen history. The electronic device 2000 may include a plurality of primitive actions provided to a third-party application in the primitive action history.

As such, the electronic device 2000 may receive a user input of selecting a primitive action, and thus may control or navigate a third-party application not provided with an API. The application screens displayed on the electronic device 2000 and primitive actions received by the electronic device 2000 may be stored in the electronic device 2000. The application screens and the primitive actions may be used when the electronic device 2000 generates a UI map or identify a focus position.

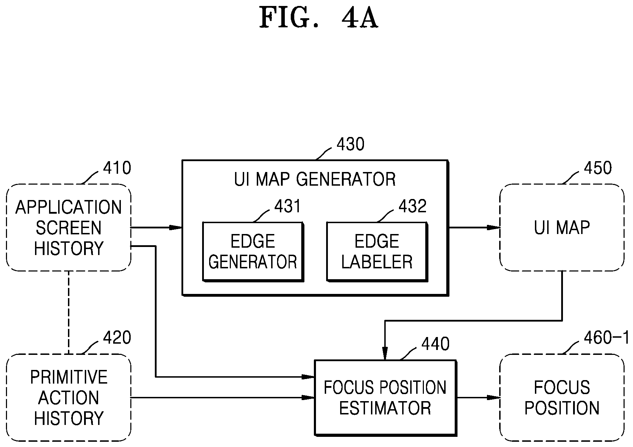

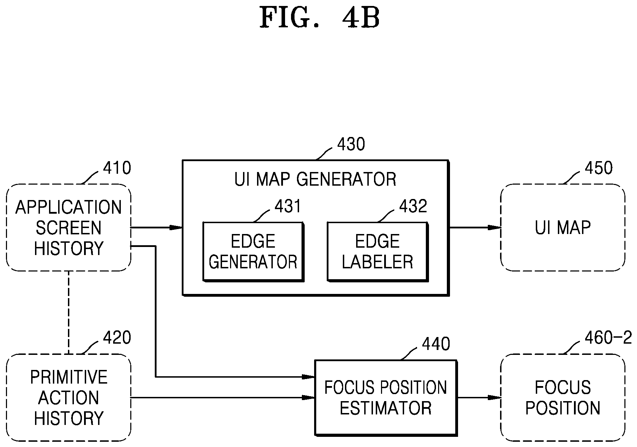

FIGS. 4A and 4B are diagrams for explaining a control operation of an electronic device according to various embodiments of the disclosure.

Referring to FIGS. 4A and 4B, the electronic device 2000 may perform a control operation (e.g., analysis of an application screen) of the electronic device 2000 by using various software modules. For example, the electronic device 2000 may generate a UI map 450 by using a UI map generator 430. The electronic device 2000 may identify focus positions 460-1 and 460-2 by using a focus position estimator 440. However, the aforementioned software modules are illustrated as being distinguished only to describe their respective functions, and thus embodiments of the disclosure are not limited thereto.

According to an embodiment of the disclosure, the electronic device 2000 may obtain at least one of a plurality of application screens included in an application screen history 410. The application screen history 410 may be generated based on an application screen displayed on the electronic device 2000 or may be generated by and received from an external electronic device, and may be transmitted to the electronic device 2000.

According to an embodiment of the disclosure, the electronic device 2000 may generate a plurality of links for a plurality of UI elements included in the application screen by using the UI map generator 430, and may generate the UI map 450 for at least one primitive action used to navigate the application screen, based on the plurality of links.

According to an embodiment of the disclosure, the UI map generator 430 may include an edge generator 431 and an edge labeler 432.

According to an embodiment of the disclosure, the edge generator 431 may identify a plurality of UI elements based on the application screen. The edge generator 431 may generate a plurality of nodes corresponding to the plurality of UI elements. The edge generator 431 may generate a plurality of links, based on node features of the plurality of nodes.

According to an embodiment of the disclosure, the edge labeler 432 may map at least one primitive action to each of the plurality of links. The edge labeler 432 may generate the UI map 450 for each of the at least one primitive action, based on a result of the mapping of the at least one primitive action.

According to an embodiment of the disclosure, the electronic device 2000 may identify the focus positions 460-1 and 460-2 indicating a UI element selected by the at least one primitive action from the application screen by using the focus position estimator 440.

According to an embodiment of the disclosure, the focus position estimator 440 may identify the focus positions 460-1 and 460-2 from an application screen at a last time point, based on respective application screens for a plurality of time points distinguished based on a time point when the at least one primitive action has been performed and at least one primitive action performed before the last time point among the plurality of time points. The respective application screens for the plurality of time points may be included in the application screen history 410. The performed at least one primitive action may be included in a primitive action history 420.

According to an embodiment of the disclosure, when using a graph-based focus position identification model, the focus position estimator 440 may identify the position of the focus by using the UI map 450. For example, as shown in FIG. 4A, the focus position estimator 440 may identify the focus position 460-1, based on the application screen history 410, the primitive action history 420, and the UI map 450.

According to an embodiment of the disclosure, when using a vision-based focus position identification model, the focus position estimator 440 may identify the position of the focus by not using the UI map 450. For example, as shown in FIG. 4B, the focus position estimator 440 may identify the focus position 460-2, based on the application screen history 410 and the primitive action history 420.

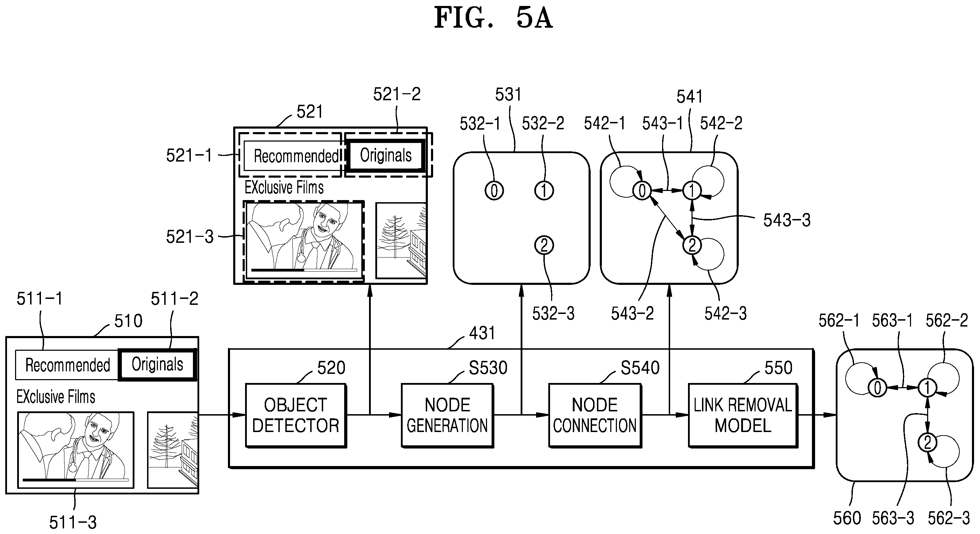

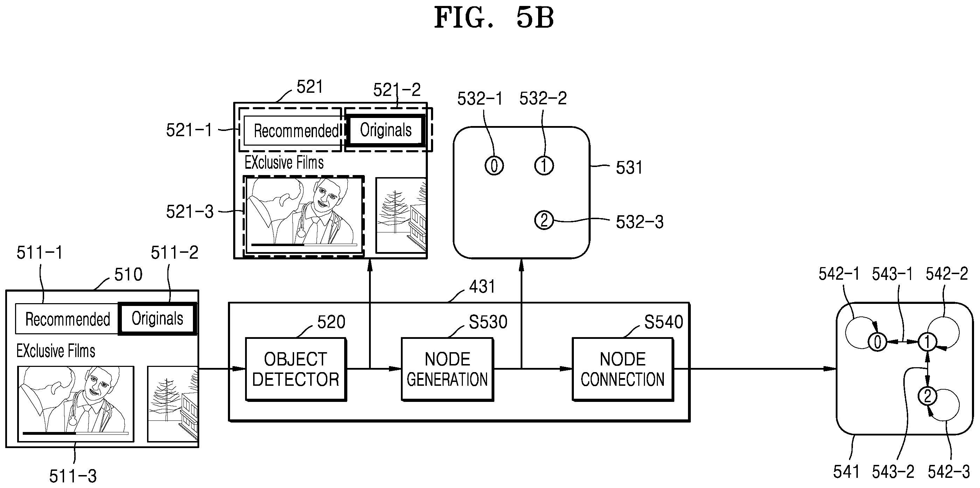

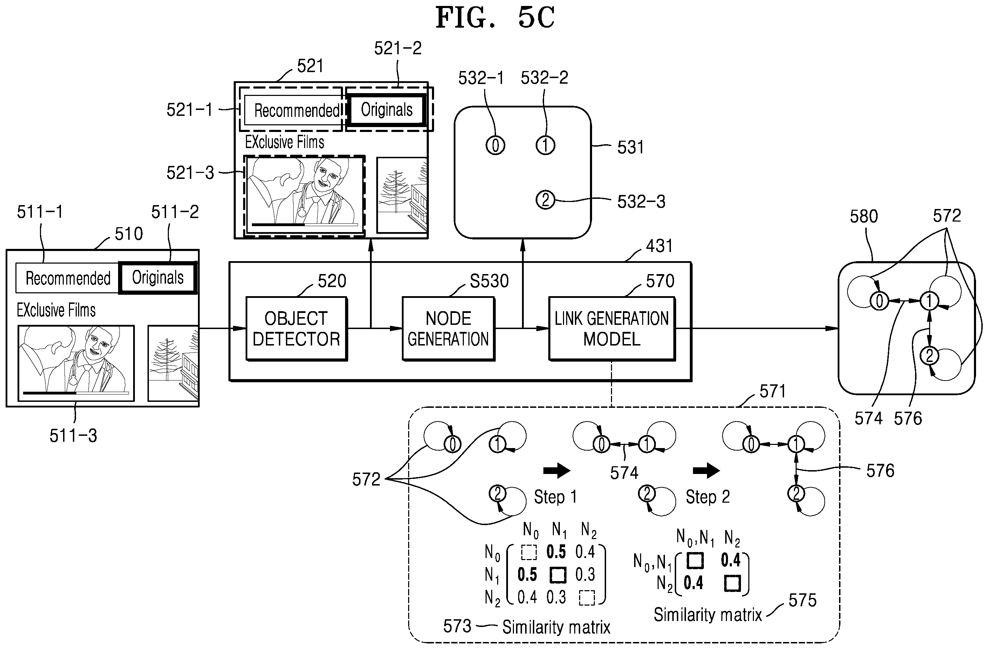

FIGS. 5A, 5B, and 5C are diagrams for explaining an operation, performed by an electronic device according to various embodiments of the disclosure, of generating an edge by using an edge generator. An operation of the edge generator 431 described above with reference to FIGS. 4A and 4B will now be described in more detail with reference to FIGS. 5A, 5B, and 5C.

Referring to FIGS. 5A, 5B, and 5C, the edge generator 431 may obtain an application screen 521 from which a plurality of UI elements 511-1, 511-2, and 511-3 included in an application screen 510 are detected using an object detector 520.

The object detector 520 may generate a plurality of bounding boxes 521-1, 521-2, and 521-3 corresponding to the plurality of UI elements 511-1, 511-2, and 511-3 included in the application screen 510.

According to an embodiment of the disclosure, the object detector 520 may identify the plurality of UI elements 511-1, 511-2, and 511-3 included in the application screen 510. The object detector 520 may generate the plurality of bounding boxes 521-1, 521-2, and 521-3 corresponding to the identified plurality of UI elements 511-1, 511-2, and 511-3. Because bounding boxes may be overlappingly generated for one UI element, the object detector 520 may generate the plurality of bounding boxes 521-1, 521-2, and 521-3 corresponding to the plurality of UI elements 511-1, 511-2, and 511-3 through object merger of the overlappingly generated bounding boxes.

According to an embodiment of the disclosure, the object detector 520 may be a model trained to detect the plurality of UI elements 511-1, 511-2, and 511-3 included in the application screen 510 by receiving the application screen 510. Examples of the object detector 520 may include, but are not limited to, an optical character recognition (OCR)-based AI model and a Region-based Convolutional Neural Network (RCNN)-based AI model.

According to an embodiment of the disclosure, when there are a plurality of application screens, the object detector 520 may identify a plurality of UI elements for the plurality of application screens, respectively, and may generate a plurality of bounding boxes corresponding to the identified plurality of UI elements. Accordingly, a plurality of application screens from which the plurality of UI elements have been detected may be generated.

The edge generator 431 may generate node data 531 including a plurality of nodes 532-1, 532-2, and 532-3 corresponding to the plurality of UI elements 511-1, 511-2, and 511-3, through a node generation operation S530. For example, the edge generator 431 may generate a first node 532-1 corresponding to a first UI element 511-1, generate a second node 532-2 corresponding to the second UI element 511-2, and generate a third node 532-3 corresponding to a third UI element 511-3, based on the application screen 521 including the plurality of bounding boxes 521-1, 521-2, and 521-3. The plurality of nodes 532-1, 532-2, and 532-3 may respectively correspond to the plurality of UI elements 511-1, 511-2, and 511-3 serving as a basis of the plurality of bounding boxes 521-1, 521-2, and 521-3.

According to an embodiment of the disclosure, the node data 531 may include information about respective node features of the plurality of nodes 532-1, 532-2, and 532-3. The node data 531 may also include respective index values for identifying the plurality of nodes 532-1, 532-2, and 532-3. In this case, the index values of the plurality of nodes may correspond to index values respectively allocated to the plurality of UI elements 511-1, 511-2, and 511-3 included in the application screen 510.

According to an embodiment of the disclosure, when there are a plurality of application screens from which a plurality of UI elements have been detected, the edge generator 431 may generate a plurality of nodes corresponding to all bounding boxes included in each of the plurality of application screens.

According to an embodiment of the disclosure, the edge generator 431 may identify bounding boxes that are included in different application screens but correspond to the same UI element. When nodes corresponding to the identified bounding boxes exist in node data, the edge generator 431 may not repeatedly generate nodes. Thus, the edge generator 431 may generate a node corresponding to a UI element that is included in a specific application screen but is not included in other application screens.

Referring to FIGS. 5A and 5B, the edge generator 431 may generate a fully connected edge 541 for the plurality of nodes through a node connection operation S540. The fully connected edge 541 may include links 542-1, 542-2, and 542-3 of the plurality of UI elements to themselves, and all links 543-1, 543-2, and 543-3 between different UI elements.

Referring to FIG. 5A, the edge generator 431 may generate a plurality of links 561-1, 561-2, 561-3, 562-2, and 562-3 for the plurality of UI elements 511-1, 511-2, and 511-3 by using a link removal model 550. Here, each of the plurality of links 561-1, 561-2, 561-3, 562-2, and 562-3 may correspond to each of the plurality of links 542-1, 542-2, 542-3, 543-1, and 543-2 of the fully connected edge 541.

According to an embodiment of the disclosure, the edge generator 431 may remove at least one link 543-2 from the plurality of links 542-1, 542-2, 542-3, 543-1 543-2, and 543-3 included in the fully connected edge 541. In this case, the plurality of links 542-1, 542-2, 542-3, 543-1, and 543-3 for the plurality of UI elements 511-1, 511-2, and 511-3 may not be removed, and the remaining link 543-2 may be removed.

According to an embodiment of the disclosure, the link removal model 550 may be a model trained to generate the plurality of links 561-1, 561-2, 561-3, 562-1, and 562-3 by receiving the node features of the plurality of nodes 532-1, 532-2, and 532-3 and the fully connected edge 541 for the plurality of nodes and removing at least one link 542-1 from the fully connected edge 541. In this case, the plurality of links 561-1, 561-2, 561-3, 562-1, and 562-3 may be included in an edge 560 for the plurality of nodes 532-1, 532-2, and 532-3.

According to an embodiment of the disclosure, the node features may include at least one of features regarding the sizes, positions, content, images, names, and hierarchy of the plurality of UI elements 511-1, 511-2, and 511-3 corresponding to the plurality of nodes 532-1, 532-2, and 532-3.

According to an embodiment of the disclosure, the edge generator 431 may obtain the node features by using the object detector 520. However, this is merely an example, and the edge generator 431 may obtain the node features by using a separate model trained to obtain a node feature by receiving an application screen.

According to an embodiment of the disclosure, the edge generator 431 may obtain features regarding the sizes and positions of the plurality of UI elements 511-1, 511-2, and 511-3 by identifying sizes and positions of bounding boxes corresponding to the plurality of UI elements 511-1, 511-2, and 511-3.

According to an embodiment of the disclosure, the edge generator 431 may classify the plurality of UI elements 511-1, 511-2, and 511-3 by icons, images, text, buttons, or the like, and may allocate a specific layer to each of the classification categories to thereby obtain features regarding the hierarchy of the plurality of UI elements 511-1, 511-2, and 511-3.

According to an embodiment of the disclosure, when the plurality of UI elements 511-1, 511-2, and 511-3 include images, the edge generator 431 may extract various features obtainable from the images to thereby obtain features regarding the images of the plurality of UI elements 511-1, 511-2, and 511-3.

According to an embodiment of the disclosure, the edge generator 431 may identify whether the plurality of UI elements 511-1, 511-2, and 511-3 are UI elements regarding content, to thereby obtain features regarding the content of the plurality of UI elements 511-1, 511-2, and 511-3.

According to an embodiment of the disclosure, when the plurality of UI elements 511-1, 511-2, and 511-3 include text, the edge generator 431 may identify the content of the text through character recognition to thereby obtain features regarding the text of the plurality of UI elements 511-1, 511-2, and 511-3.

According to an embodiment of the disclosure, when the edge generator 431 obtains node features from the plurality of UI elements 511-1, 511-2, and 511-3, information about the obtained node features may be stored as the node data 531.

Referring to FIG. 5B, the edge generator 431 may omit an operation of removing at least one link included in the fully connected edge 541 by using the link removal model 550 described above with reference to FIG. 5A, and may generate the plurality of links 541-1, 541-2, 541-3, 542-1 542-2, and 542-3 for the plurality of UI elements 511-1, 511-2, and 511-3.

According to an embodiment of the disclosure, when the number of links generated in the node connection operation S540 is not large, it may not be necessary to remove at least one link among the plurality of links generated using the link removal model 550. Accordingly, when the number of UI elements identified from the application screen 510 is less than a preset number and/or the number of generated links is less than a preset number, the edge generator 431 may determine that the link removal model 550 is not used.

According to an embodiment of the disclosure, there may be a case where it is hard to use the link removal model 550, due to a limitation due to, for example, a lack of the computing power of the hardware of the electronic device 2000. Thus, the edge generator 431 may determine that the link removal model 550 is not used, based on the computing power of the hardware of the electronic device 2000.

According to an embodiment of the disclosure, when the edge generator 431 determines that the link removal model 550 is not used, the edge generator 431 may generate the fully connected edge 541 through the node connection operation S540, and may not remove at least one link included in the fully connected edge 541. In this case, the plurality of links 541-1, 541-2, 541-3, 542-1 542-2, and 542-3 included in the fully connected edge 541 may be a plurality of links for the plurality of UI elements 511-1, 511-2, and 511-3.

As such, the electronic device 2000 according to an embodiment of the disclosure may generate the plurality of links by generating the fully connected edge 541 and removing or not removing the at least one link included in the fully connected edge 541. Thus, the application screen may be analyzed in a manner optimized to the computing capability of the hardware of the electronic device 2000.

Referring to FIG. 5C, the edge generator 431 may generate a plurality of links 572, 574, and 576 for the plurality of UI elements 511-1, 511-2, and 511-3 by using a link generation model 570.

According to an embodiment of the disclosure, the link generation model 570 may be a model trained to perform hierarchical clustering 571 with respect to the plurality of nodes 532-1, 532-2, and 532-3 by receiving the node features and the plurality of nodes 532-1, 532-2, and 532-3, and, in each operation of the hierarchical clustering 571, generate the plurality of links 572, 574, and 576 for the plurality of UI elements 511-1, 511-2, and 511-3 by connecting nodes clustered in the same layer to one another. In this case, the plurality of links 572, 574, and 576 may be included in an edge 580 for the plurality of nodes 532-1, 532-2, and 532-3.

According to an embodiment of the disclosure, the link generation model 570 may perform hierarchical clustering step by step, based on a similarity matrix. The similarity matrix may include a similarity of a plurality of nodes (or a plurality of clusters) with respect to other nodes (or a plurality of clusters) excluding themselves. The similarity matrix may be calculated based on a distance between feature vectors including the node features of the plurality of nodes. Examples of the distance between the feature vectors may include, but are not limited to, a Euclidean distance, a statistical distance, and a Minkowski distance.

According to an embodiment of the disclosure, the link generation model 570 may allow a plurality of nodes for which the similarity of a similarity matrix is equal to or greater than a preset value to cluster in the same layer. The link generation model 570 may generate a link by connecting the nodes clustered in the same layer to one another.

According to an embodiment of the disclosure, when different clusters to which the plurality of nodes belong cluster in the same layer during hierarchical clustering, the link generation model 570 may connect at least one of a plurality of nodes belonging to each cluster to at least one of a plurality of nodes belonging to another cluster. Whether a node among the plurality of nodes belonging to each cluster is connected to a node belonging to another cluster may be determined based on a similarity between the nodes.

For example, as shown in FIG. 5C, the link generation model 570 may generate a plurality of first links 572 representing connections of the plurality of UI elements 511-1, 511-2, and 511-3 to themselves.

The link generation model 570 may perform clustering, based on a first similarity matrix 573. The value of a component of a first row and a second column and the value of a component of a second row and a first column of the first similarity matrix 573 may refer to a similarity between the first node 532-1 and the second node 532-2, the value of a component of the first row and a third column and the value of a component of a third row and the first column of the first similarity matrix 573 may refer to a similarity between the first node 532-1 and the third node 532-3, and the value of a component of the first row and a third column and the value of a component of the third row and the second column of the first similarity matrix 573 may refer to a similarity between the second node 532-2 and the third node 532-3.

The link generation model 570 may allow the first node 532-1 and the second node 532-2 for which a similarity in the first similarity matrix 573 is equal to or greater than a threshold value to cluster in the same layer. The link generation model 570 may generate a second link 574 by connecting the first node 532-1 and the second node 532-2 clustered in the same layer to each other.

The link generation model 570 may perform clustering, based on a second similarity matrix 575. The value of a component of a first row and a second column and the value of a component of a second row and a first column of the second similarity matrix 575 may refer to a similarity between a cluster to which the first node 532-1 and the second node 532-2 belong and the third node 532-3.

The link generation model 570 may allow the cluster to which the first node 532-1 and the second node 532-2 belong and the third node 532-3 for which a similarity in the second similarity matrix 575 is equal to or greater than a threshold value to cluster in the same layer. The link generation model 570 may generate a third link 576 by connecting the cluster to which the first node 532-1 and the second node 532-2 belong and the third node 532-3 clustered in the same layer to each other.

As such, the electronic device 2000 according to an embodiment of the disclosure may generate the plurality of links by ascertaining connectivity between the plurality of UI elements by performing clustering in a bottom-up manner. Accordingly, unlike other clustering methods, the electronic device 2000 may train the link generation model 570 without determining the number of clusters in advance In addition, compared to the other clustering methods, the computation costs necessary for clustering may be reduced.

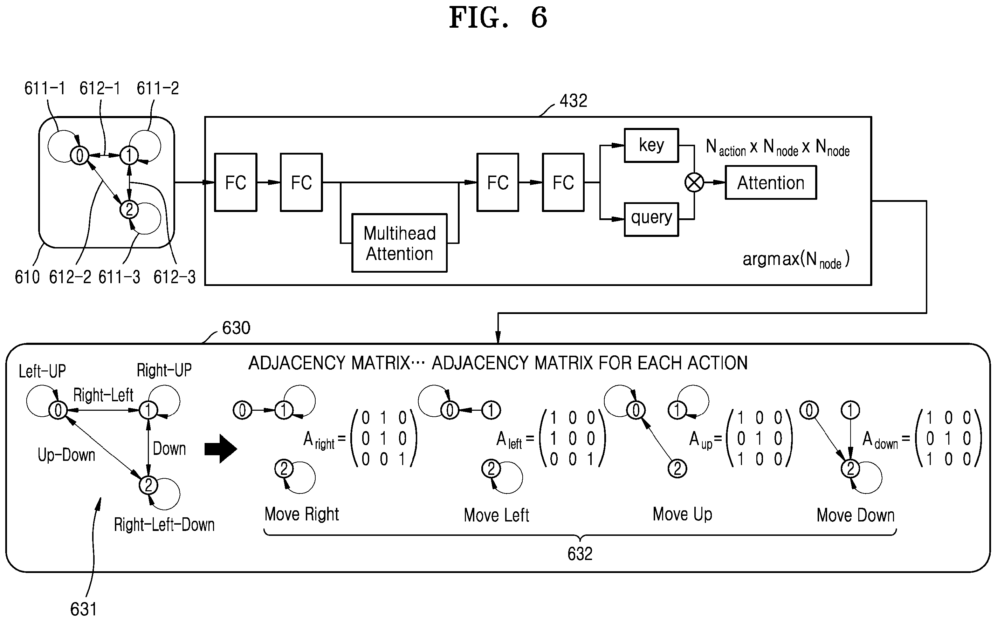

FIG. 6 is a diagram for explaining an operation, performed by an electronic device of generating a UI map by using an edge labeler according to an embodiment of the disclosure. An operation of the edge labeler 432 described above with reference to FIGS. 4A and 4B will now be described in more detail with reference to FIG. 6.

Referring to FIG. 6, according to an embodiment of the disclosure, the edge labeler 432 may map at least one primitive action to each of a plurality of links 611-1, 611-2, 611-3, 612-1, 612-2, and 612-3 included in an edge 610. The edge 610 may refer to an edge generated by the edge generator 431. For example, the edge 610 may be the edge 560 of FIG. 5A, the edge 541 of FIG. 5B, or the edge 580 of FIG. 5C.

According to an embodiment of the disclosure, the edge labeler 432 may map at least one primitive action to each of the plurality of links 611-1, 611-2, 611-3, 612-1, 612-2, and 612-3, based on information about a plurality of primitive actions performed before.

In detail, the edge labeler 432 may map at least one primitive action to each of the plurality of links 611-1, 611-2, 611-3, 612-1, 612-2, and 612-3 to correspond to information about how a focus position has been moved by performed primitive actions.

For example, the edge labeler 432 may map the primitive actions 'Move Left' and 'Move Up' to a first link 611-1, based on information indicating that, when the primitive actions 'Move Left' and 'Move Up' have been performed, there are no changes in the position of a focus on a UI element corresponding to a No. 0 node. The edge labeler 432 may map the primitive action 'Move Right' to a second link 611-2, based on information indicating that, when the primitive action 'Move Right' has been performed, the focus positioned on the UI element corresponding to the No. 0 node has been moved to a UI element corresponding to a No. 1 node. The edge labeler 432 may map the primitive action 'Move Left' to a fourth link 612-1, based on information indicating that, when the primitive action 'Move Right' has been performed, the focus positioned on the UI element corresponding to the No. 1 node has been moved to a UI element corresponding to the No. 0 node.

According to an embodiment of the disclosure, the edge labeler 432 may map at least one primitive action to each of the plurality of links 611-1, 611-2, 611-3, 612-1, 612-2, and 612-3, based on node features of a plurality of nodes.

In detail, the edge labeler 432 may identify positional relationship information of a plurality of UI elements corresponding to the plurality of nodes, based on information about sizes and positions of the UI elements. The edge labeler 432 may identify at least one UI element highly likely to be mapped to each of the plurality of links 611-1, 611-2, 611-3, 612-1, 612-2, and 612-3, based on the positional relationship information. The edge labeler 432 may map the identified at least one UI element to each of the plurality of links 611-1, 611-2, 611-3, 612-1, 612-2, and 612-3. The positional relationship information may include information about which UI elements exist in a direction corresponding to a primitive action based on a specific UI element.

According to an embodiment of the disclosure, the edge labeler 432 may generate a UI map 630 for each of the at least one primitive action, based on a result 631 of the mapping of the at least one primitive action. In other words, the edge labeler 432 may generate the UI map 630 for each of the at least one primitive action, based on which primitive action has been mapped to each of the plurality of links 611-1, 611-2, 611-3, 612-1, 612-2, and 612-3.

According to an embodiment of the disclosure, the UI map 630 may include information about which primitive action is needed for a focus to move along the plurality of links 611-1, 611-2, 611-3, 612-1, 612-2, and 612-3 included in the edge 610. For example, the UI map 630 may include information indicating that the primitive action 'Move Left' or 'Move UP' is needed for a focus to move along the first link 611-1, based on the result 631 of the mapping of the at least one primitive action.

According to an embodiment of the disclosure, the UI map 630 may include information about a direction in which the focus is moved along the plurality of links 611-1, 611-2, 611-3, 612-1, 612-2, and 612-3 by the at least one primitive action. For example, the UI map 630 may include information indicating that the focus is moved from the No. 0 node to the No. 1 node by the primitive action 'Move Right' mapped to a second link 612-1 and the focus is moved from the No. 1 node to the No. 0 node by the primitive action 'Move Left' mapped to the second link.

According to an embodiment of the disclosure, the UI map 630 may generate respective adjacency matrices 632 for the at least one primitive action. A plurality of rows and a plurality of columns of an adjacency matrix may correspond to each of the plurality of nodes included in the UI map 630.

According to an embodiment of the disclosure, a component of the adjacency matrix may have a value of 0 or 1 generated by a one-hot encoding scheme. In this case, the component of the adjacency matrix may refer to whether a focus is able to move from a node corresponding to the row of the component to a node corresponding to the column of the component by each primitive action. For example, when a component of a first row of an adjacency matrix of the primitive action 'Move Right' is (0, 1, 0), this may refer to information indicating that a focus positioned on the No. 0 node is moved to the No. 1 node by the primitive action 'Move Right' without being moved to the No. 0 node and the No. 2 node.

According to an embodiment of the disclosure, a component of the adjacency matrix may have a value corresponding to a transition probability. In this case, the component of the adjacency matrix may refer to a probability that a focus is able to move from a node corresponding to the row of the component to a node corresponding to the column of the component by each primitive action. For example, when the component of the first row of the adjacency matrix of the primitive action 'Move Right' is (0.2, 0.7, 0.1), this may refer to information indicating that a probability that the focus positioned on the No. 0 node is kept on the No. 0 node by the primitive action 'Move Right' is 20%, a probability that the focus positioned on the No. 0 node is moved to the No. 1 node by the primitive action 'Move Right' is 70%, and a probability that the focus positioned on the No. 0 node is moved to the No. 2 node by the primitive action 'Move Right' is 10%.

According to an embodiment of the disclosure, the edge labeler 432 may be a model trained to receive the edge 610 and output the respective adjacency matrices 632 for the primitive actions, based on the received edge 610. The edge labeler 432 may include a multi-head attention-based AI model. In this case, a parallel attention corresponding to each of the at least one primitive action may be performed, and the adjacency matrices 632 for the at least one primitive action may be generated based on an attention score generated by each of the parallel attentions.

According to an embodiment of the disclosure, the edge labeler 432 may be trained using, as a training dataset, an edge dataset in which at least one primitive action included in a primitive action history is mapped to the plurality of links.

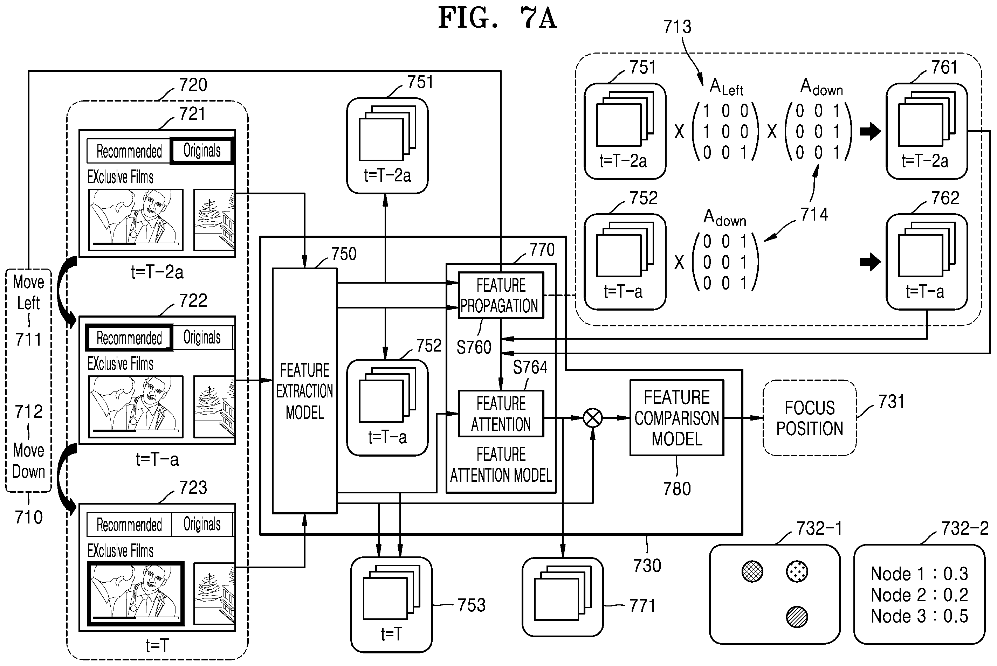

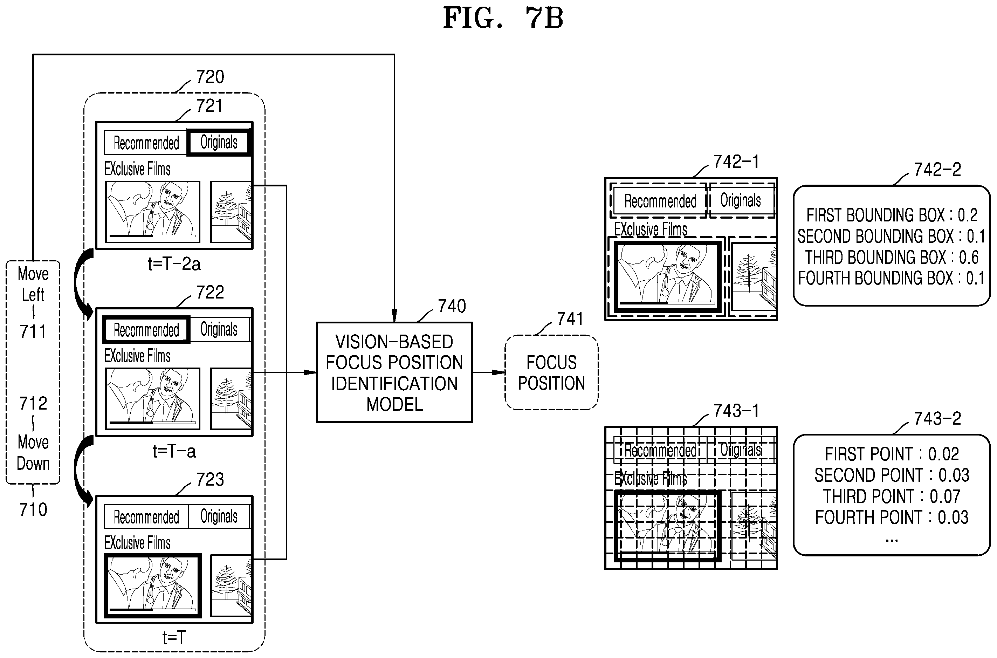

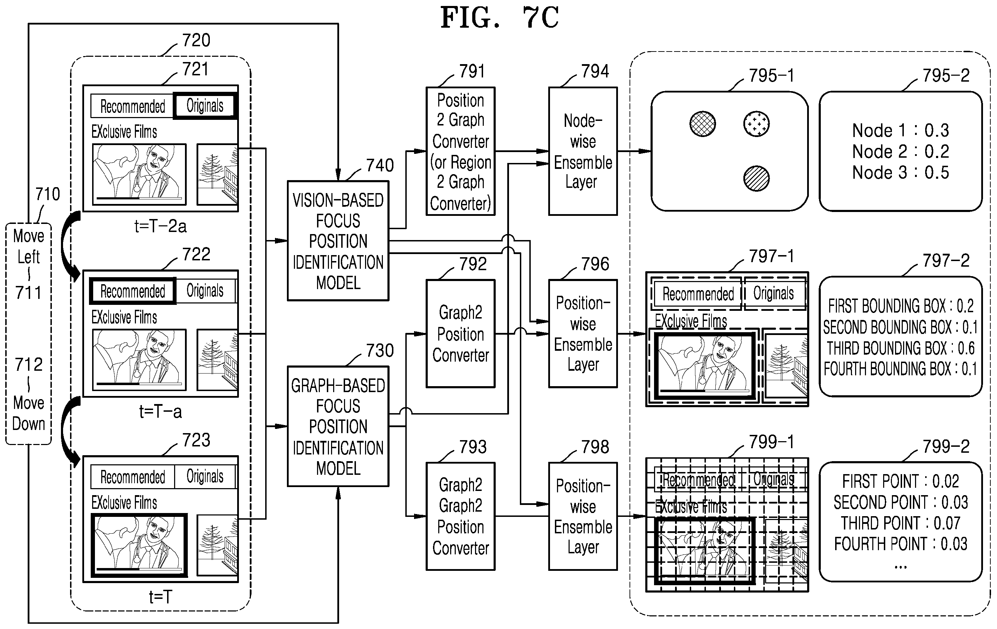

FIGS. 7A, 7B, and 7C are diagrams for explaining an operation, performed by an electronic device according to various embodiments of the disclosure, of identifying the position of a focus by using a focus position estimator. An operation of the focus position estimator 440 described above with reference to FIGS. 4A and 4B will now be described in more detail with reference to FIGS. 7A, 7B, and 7C.

According to an embodiment of the disclosure, the focus position estimator 440 may identify a focus position 731 by using at least one of a graph-based focus position identification model 730 or a vision-based focus position identification model 740. The graph-based focus position identification model 730 and the vision-based focus position identification model 740 may generate information about the position of a focus, based on application screens 720 for a plurality of time points distinguished based on a time point when at least one primitive action is performed and at least one performed primitive action 710. The application screens 720 for the plurality of time points may be application screens included in an application screen history. The at least one performed primitive action 710 may be a primitive action included in a primitive action history.

Referring to FIG. 7A, the focus position estimator 440 may identify the focus position 731 by using the graph-based focus position identification model 730. The graph-based focus position identification model 730 may include a feature extraction model 750 for outputting first focus feature matrices 751, 752, and 753 for the plurality of time points including focus features, a feature attention model 770 for outputting second focus feature matrices 771 and 772 in which focus features are emphasized, and a feature comparison model 780 for outputting probabilities 732-2 that a focus is to be positioned on each of the plurality of nodes.

The feature extraction model 750 may extract a focus feature from a plurality of UI elements included in each of the application screens 720 for the plurality of time points. The focus feature may include a feature associated with the position of the focus obtained from the plurality of UI elements. For example, the focus feature may be feature of visual indications for a user to recognize that a specific user interface element among a plurality of user interface elements is focused.

According to an embodiment of the disclosure, the application screens 720 for the plurality of time points may be application screens distinguished based on a time point when the at least one primitive action 710 has been performed before. For example, when a primitive action 'Move Left' 711 is performed on an application screen 721 at a first time point (t = T-2a), an application screen 722 at a second time point (t= T-a) may be displayed, and, when a primitive action 'Move Down' 712 is performed on the application screen 722 at the second time point, an application screen 723 at a third time point (t = T) may be displayed. When a primitive action is not performed after the third time point, the third time point may be a last time point.

The feature extraction model 750 may output first focus feature matrices 751, 752, and 753 for the plurality of time points by mapping the extracted focus feature to nodes corresponding to a plurality of UI elements included in an application screen.

According to an embodiment of the disclosure, the feature extraction model 750 may extract the focus feature, based on the application screen 521 from which the plurality of UI elements generated by the object detector 520 of FIGS. 5A, 5B, and 5C have been detected, and may generate the first focus feature matrices 751, 752, and 753 for the plurality of time points, based on the node data 531 generated in the node generation operation S530.

According to an embodiment of the disclosure, the feature extraction model 750 may be a model trained to extract a focus feature from each of the plurality of application screens 721, 722, and 723 by receiving the plurality of application screens 721, 722, and 723, and output the first focus feature matrices 751, 752, and 753 for the plurality of time points by mapping the focus feature to a node corresponding to a UI element from which the focus feature is obtained. In this case, the feature extraction model 750 may extract the focus feature from the plurality of UI elements included in the application screens 721, 722, and 723 for the plurality of time points through the same learned weight. Examples of the feature extraction model 750 may include, but are not limited to ResNet-, EfficientNet-, and MobileNet-based AI models.

The feature attention model 770 may generate one or more transformed first focus feature matrices 761 and 762, based on the first focus feature matrices 751 and 752 for the time points excluding a last time point among the plurality of time points and a UI map for the at least one primitive action 710 performed from the time points excluding the last time point among the plurality of time points to the last time point.

According to an embodiment of the disclosure, the feature attention model 770 may generate the transformed first focus feature matrices 761 and 762 in which focus features of the first focus feature matrices 751 and 752 for the time points excluding the last time point among the plurality of time points are propagated to other nodes, through a feature propagation operation S760. In this case, the focus features may be propagated based on the UI map for the performed at least one primitive action 710. Accordingly, focus features mapped to nodes corresponding to the focused UI elements on the application screen 721 at the first time point and the application screen 722 at the second time point may be propagated to a node corresponding to a focused UI element on the application screen 723 at the third time point.

According to an embodiment of the disclosure, the UI map for the performed at least one primitive action 710 may be one of the adjacency matrices 632 for the at least one primitive action generated by the edge labeler 432 of FIG. 6. In this case, the focus features may be propagated to other nodes through a matrix multiplication operation.

For example, the feature attention model 770 may generate the transformed first focus feature matrix 761 of the first time point in which node features are propagated by multiplying the focus feature matrix 751 of the first time point by the adjacency matrix 713 for the primitive action 'Move Left' 711 performed between the first time point and the second time point and the adjacency matrix 714 for the primitive action 'Move Down' 712 performed between the second time point and the third time point. The feature attention model 770 may generate the transformed first focus feature matrix 762 of the second time point by multiplying the focus feature matrix 752 of the second time point by the adjacency matrix 714 for the primitive action 'Move Down' 712 performed between the second time point and the third time point.

The feature attention model 770 may output the second focus feature matrix 771 in which a focus feature have been emphasized, based on the transformed first focus feature matrices 761 and 762 and the focus feature matrix 753 of the third time point.

According to an embodiment of the disclosure, the feature attention model 770 may emphasize a focus feature mapped to a node corresponding to a focused UI element on the application screen 723 at the third time point by comparing focus features mapped to the plurality of nodes included in the transformed first focus feature matrices 761 and 762 with focus features mapped to the plurality of nodes included in the focus feature matrix 753 of the third time point, through a feature attention operation S764. As such, the feature attention model 770 may generate the second focus feature matrix 771 in which the values of focus features mapped to nodes corresponding to unfocused UI elements among the plurality of UI elements included in the application screen 723 at the third time point are decreased and the value of the focus feature mapped to the node corresponding to the focused UI element among the plurality of UI elements included in the application screen 723 at the third time point is increased, through temporal focus feature attention.

According to an embodiment of the disclosure, the feature attention model 770 may be a model trained to generate the one or more transformed first focus feature matrices 761 and 762 by receiving the first focus feature matrices 751 and 752 for the time points excluding the last time point among the plurality of time points and the UI map for the at least one primitive action 710 performed from the time points excluding the last time point among the plurality of time points to the last time point, and output the second focus feature matrix 771 by combining the one or more transformed first focus feature matrices 761 and 762 with the first focus feature matrix 753 at the last time point. For example, the feature attention model 770 may include an attention mechanism-based AI model.

The feature comparison model 780 may identify the focus position 731, based on the focus feature matrix 751 of the third time point and the second focus feature matrix 771.

According to an embodiment of the disclosure, either the focus feature matrix 751 of the third time point or the second focus feature matrix 771 may be input to the feature comparison model 780, or the focus feature matrix 751 of the third time point and the second focus feature matrix 771 may be aggregated and input to the feature comparison model 780.

According to an embodiment of the disclosure, the feature comparison model 780 may compare the focus features respectively mapped to the plurality of nodes with one another to emphasize the focus feature mapped to the node corresponding to the focused UI element on the application screen 723 at the third time point. As such, the feature comparison model 780 may obtain a emphasized focus feature 732-1 in which the focus feature mapped to the node corresponding to the focused UI element among the plurality of UI elements included in the application screen 723 at the third time point has been emphasized, through spatial focus feature attention.

According to an embodiment of the disclosure, the feature comparison model 780 may identify the probability 732-2 that a focus is positioned on each of the plurality of nodes, based on the emphasized focus feature 732-1. Accordingly, the focus position estimator 440 may identify that a focus of the application screen 723 at the third time point is positioned on a UI element corresponding to a node having a highest probability, based on the probability 732-2 that a focus is positioned on each of the plurality of nodes, which is identified by the feature comparison model 780.

According to an embodiment, the feature comparison model 780 may be a model trained to output the probability that a focus is positioned on each of a plurality of nodes by receiving a first focus feature matrix and a second focus feature matrix. Examples of the feature comparison model 780 may include graph data-based AI models such as a graph neural network (GNN) model, a graph convolutional network (GCN) model, and a graph attentional network (GAN) model. In this case, the adjacency matrices 632 for the at least one primitive action generated by the edge labeler 432 of FIG. 6 may be input as adjacency matrices necessary for a neural network operation to the feature comparison model 780.

According to an embodiment of the disclosure, only the application screen 723 at the third time point may exist in the application screens 720 of the plurality of time points, and the application screens 721 and 722 before the third time point may not exist in the application screens 720 of the plurality of time points. In this case, the graph-based focus position identification model 730 may identify the focus position 731 through spatial focus feature attention by using the feature comparison model 780, without performing temporal focus feature attention by using the feature attention model 770.

As such, the electronic device 2000 according to an embodiment of the disclosure may more accurately identify the position of the focus by performing temporal focus feature attention and spatial focus feature attention on a focus feature obtained from the respective application screens for the plurality of time points.

Referring to FIG. 7B, the focus position estimator 440 may identify a focus position 741 by using the vision-based focus position identification model 740. The vision-based focus position identification model 740 may output a focus positioning probability for each of a plurality of regions included in the application screen 723 at the third time point by receiving the application screens 720 for the plurality of time points and the performed at least one primitive action 710.

According to an embodiment of the disclosure, the application screens 720 for the plurality of time points and the performed at least one primitive action 710 may be input to the vision-based focus position identification model 740, together with an application screen and a primitive action in a mapping relationship. For example, the application screen 722 at the second time point and the performed primitive action 'Move Left' 711 performed before the second time point may be input as a pair to the vision-based focus position identification model 740.

According to an embodiment of the disclosure, the focus position 741 may be identified as one of a plurality of bounding boxes included in an application screen 742-1 at the third time point on which bounding boxes are generated. In this case, the vision-based focus position identification model 740 may generate bounding boxes corresponding to the plurality of UI elements included in the application screen 723 at the third time point, and may identify a focus positioning probability 742-2 for each of the generated plurality of bounding boxes.

According to an embodiment of the disclosure, the focus position 741 may be identified as one of a plurality of regions included in an application screen 743-1 at the third time point divided by a preset size. In this case, the vision-based focus position identification model 740 may divide the application screen 723 at the third time point by the preset size, and may identify a focus positioning probability 743-2 for each of a plurality of regions obtained by the division.

Accordingly, the focus position estimator 440 may identify that the focus of the application screen 723 at the third time point is positioned on a bounding box or divided region having a highest probability, based on the focus positioning probabilities 742-2 and 743-2 identified by the vision-based focus position identification model 740.

According to an embodiment of the disclosure, the focus position estimator 440 may be a model trained to output a focus positioning probability for each of the plurality of regions by receiving the application screens for the plurality of time points and the performed at least one primitive action. Examples of the focus position estimator 440 may include, but are not limited to, a convolutional neural network (CNN)-based AI model and a vision transformer-based AI model.

As such, the electronic device 2000 according to an embodiment of the disclosure may identify the position of the focus by using only the application screens for the plurality of time points and the performed at least one primitive action, without generating a UI map based on graph data.

Referring to FIG. 7C, the focus position estimator 440 may identify the position of the focus by using the graph-based focus position identification model 730 and the vision-based focus position identification model 740. In this case, the position of the focus may be identified as at least one of a node at which the focus is positioned, a bounding box at which the focus is positioned, or a divided region at which the focus is positioned.

According to an embodiment of the disclosure, the focus position estimator 440 may convert information output by the graph-based focus position identification model 730 and the vision-based focus position identification model 740 into information about other dimensions by using a plurality of position converters 791, 792, and 793. The focus position estimator 440 may combine information converted into other dimensions with information generated by the graph-based focus position identification model 730 or the vision-based focus position identification model 740 through at least one of a plurality of wise ensemble layers 794, 796, and 798. Accordingly to an embodiment of the disclosure, the focus position estimator 440 may obtain the emphasized focus feature 795-1, based on the combined information, and generate information about a probability 795-2 that a focus is positioned on each of the plurality of nodes, based on the obtained emphasized focus feature. Accordingly to an embodiment of the disclosure, the focus position estimator 440 may generate information about a probability 797-2 that the focus is located on each of the plurality of bounding boxes included in the application screen 797-1, based on the combined information. Accordingly to an embodiment of the disclosure, the focus position estimator 440 may generate information about a probability 799-2 that focus is located on each of the plurality of areas of the application screen 799-1, based on the combined information. Accordingly to an embodiment of the disclosure, the focus position estimator 440 may identify at least one of a focused node, a focused bounding box, or a focused divided region, based on the generated pieces of information 795-2, 797-2, and 799-2.

For example, the focus position estimator 440 may convert information about a focus positioning probability for each of a plurality of nodes output by the graph-based position identification model 730 into information about a focus positioning probability for each of bounding boxes corresponding to a plurality of UI elements, through the graph-position converter 792. The focus position estimator 440 may combine the information output by the graph-position converter 792 with information about a focus positioning probability for each of the plurality of bounding boxes output by the vision-based focus position identification model 740 through a position-wise ensemble layer 796 to thereby identify a focus positioning probability (i.e., generated pieces of information 797-2) for each of a plurality of bounding boxes included in the application screen 797-1 at the third time point on which bounding boxes are generated. The focus position estimator 440 may identify that the focus of the application screen 723 at the third time point is positioned on a bounding box having a highest probability, based on information about the focus positioning probability (i.e., generated pieces of information 797-2).

As such, the electronic device 2000 according to an embodiment of the disclosure may identify the position of the focus by combining pieces of information for identifying focus positions in different dimensions wither each other, so that the focus position may be more accurately identified.

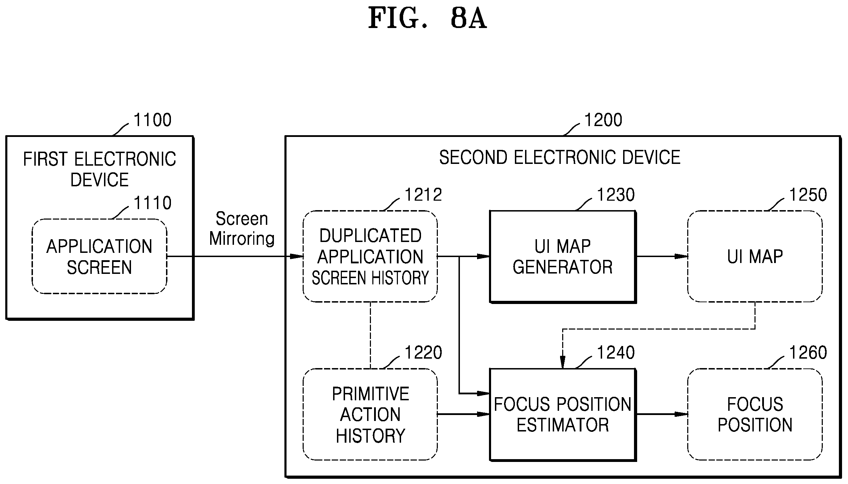

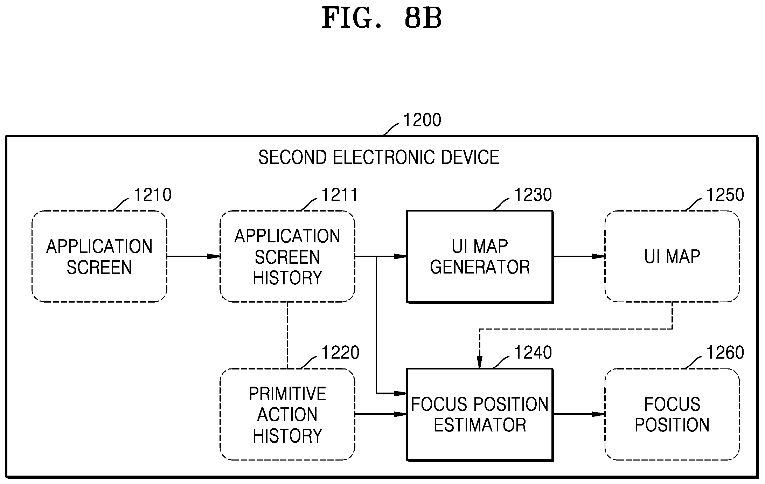

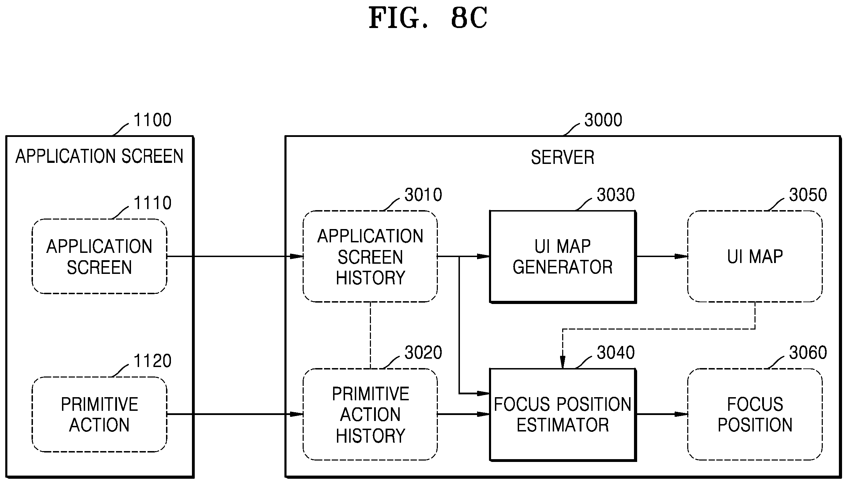

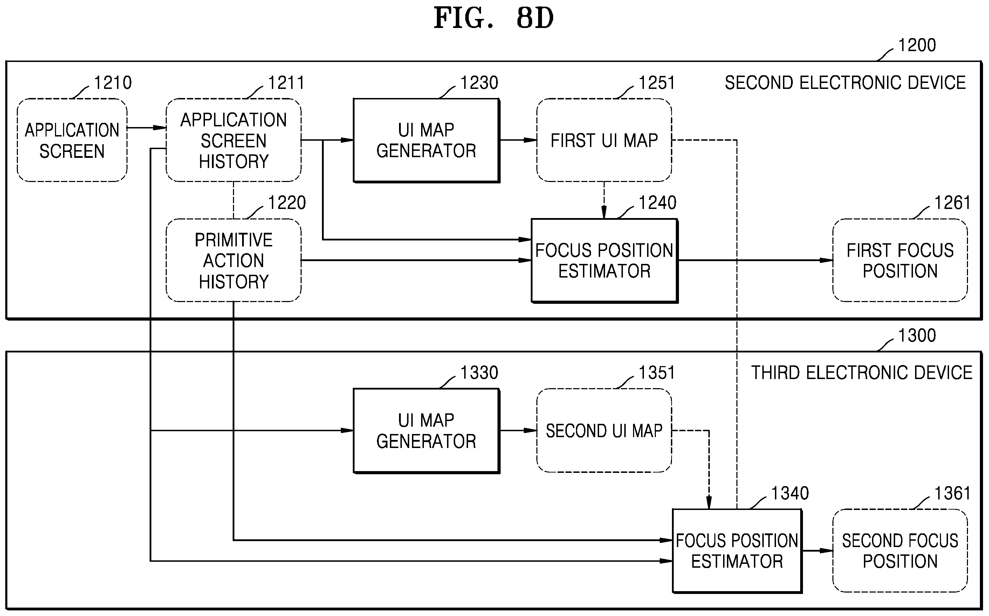

FIGS. 8A, 8B, 8C, and 8D are diagrams for explaining a method, performed by an electronic device according to various embodiments of the disclosure, of analyzing an application screen.

Referring to FIG. 8A, an application may be executed in a first electronic device 1100 and displayed on the first electronic device 1100. The application executed in the first electronic device 1100 may be a third-party application not provided with an API.

According to an embodiment of the disclosure, it may be more suitable for an application screen 1110 to be analyzed in a second electronic device 1200 than for an application screen to be analyzed in the first electronic device 1100. For example, the first electronic device 1100 may be an electronic device having a low hardware computing performance (e.g., a TV or signage), and the second electronic device 1200 may be an electronic device having a high hardware computing performance (e.g., a laptop computer or a smartphone). Thus, in order to analyze the application screen 1110 more quickly and accurately, the application screen 1110 may be analyzed in the second electronic device 1200 instead of the first electronic device 1100 in which an application is executed.

According to an embodiment of the disclosure, the first electronic device 1100 may duplicate the application screen 1110 and may transmit the duplicated application screen 1110 to the second electronic device 1200. The second electronic device 1200 may display a received application screen. An application screen displayed on the second electronic device 1200 or received from the first electronic device 1100 may be stored in a duplicated application screen history 1212.

According to an embodiment of the disclosure, a primitive action may be input to the first electronic device 1100 in order to control an application executed by the first electronic device 1100 or navigate an application screen.

According to an embodiment of the disclosure, the primitive action may be transmitted from a user input device directly to the first electronic device 1100. In this case, the first electronic device 1100 may transmit the received primitive action to the second electronic device 1200. The primitive action may be transmitted from the user input device to the second electronic device 1200. In this case, the second electronic device 1200 may transmit the received primitive action to the first electronic device 1100. The primitive action transmitted to the second electronic device 1200 may be stored in a primitive action history 1220.

According to an embodiment of the disclosure, the second electronic device 1200 may include a UI map generator 1230 and a focus position estimator 1240. The second electronic device 1200 may analyze an application screen included in the duplicated application screen history 1212 by using the UI map generator 1230 and the focus position estimator 1240. For example, the second electronic device 1200 may obtain at least one of a plurality of application screens included in the duplicated application screen history 1212. The second electronic device 1200 may generate a UI map 1250 by using a UI map generator 1230. The electronic device 2000 may identify a focus position 1260 by using the focus position estimator 1240. A method, performed by the second electronic device 1200, of analyzing a duplicated application screen by using the UI map generator 1230 and the focus position estimator 1240 is the same as the operation described above with reference to FIGS. 1, 2, 3A, 3B, 4A, 4B, 5A, 5B, 5C, 6, 7A, 7B, and 7C, performed by the electronic device 2000, of analyzing an application screen by using the UI map generator 430 and the focus position estimator 440, and thus a repeated description thereof will be omitted.

Referring to FIG. 8B, an application may be executed in the second electronic device 1200 and displayed on the second electronic device 1200. The application executed in the second electronic device 1200 may be a third-party application not provided with an API.

According to an embodiment of the disclosure, because computing performance of hardware of the second electronic device 1200 in which an application is executed is high, it may be more accurate and faster for the second electronic device 1200 to directly analyze the application screen 1110 rather than another electronic device capable of communicating with the second electronic device 1200. In this case, the application screen 1110 may be analyzed in the second electronic device 1200.

According to an embodiment of the disclosure, the second electronic device 1200 may store an application screen 1210 provided from an application currently being executed in an application screen history 1211, or may store an application screen displayed on the second electronic device 1200 in the application screen history 1211.

According to an embodiment of the disclosure, the second electronic device 1200 may receive a primitive action from a user input device and may transmit the received primitive action to the application currently being executed. The second electronic device 1200 may store the primitive action transmitted to the application, in the primitive action history 1220.

According to an embodiment of the disclosure, the second electronic device 1200 may analyze an application screen included in the application screen history 1211 by using the UI map generator 1230 and the focus position estimator 1240. For example, the second electronic device 1200 may obtain at least one of a plurality of application screens included in the application screen history 1211. The second electronic device 1200 may generate the UI map 1250 by using the UI map generator 1230. The electronic device 2000 may identify the focus position 1260 by using the focus position estimator 1240. A method, performed by the second electronic device 1200, of analyzing an application screen by using the UI map generator 1230 and the focus position estimator 1240 is the same as the operation described above with reference to FIGS. 1, 2, 3A, 3B, 4A, 4B, 5A, 5B, 5C, 6, 7A, 7B, and 7C, performed by the electronic device 2000, of analyzing an application screen by using the UI map generator 430 and the focus position estimator 440, and thus a repeated description thereof will be omitted.

Referring to FIG. 8C, an application may be executed in the first electronic device 1100 and displayed on the first electronic device 1100. The application executed in the first electronic device 1100 may be a third-party application not provided with an API.

According to an embodiment of the disclosure, a server 3000 includes hardwares having high computing performances in order to process a large amount of computation. Thus, in order to analyze an application screen more quickly and accurately, the application screen 1110 may be analyzed in the server 3000 instead of the first electronic device 1100.

According to an embodiment of the disclosure, the server 3000 may receive the application screen 1110 and a primitive action 1120 from the first electronic device 1100. The server 3000 may store the received application screen 1110 in an application screen history 3010, and may store the received primitive action 1120 in a system action history 3020.

According to an embodiment of the disclosure, the server 3000 may receive the application screen history 3010 and the system action history 3020 from the first electronic device 1100. In this case, the application screen history 3010 and the system action history 3020 may be generated in the first electronic device 1100 and may be transmitted to the server 3000.

According to an embodiment of the disclosure, the server 3000 may analyze an application screen included in the application screen history 3010 by using a UI map generator 3030 and a focus position estimator 3040. For example, the server 3000 may obtain at least one of a plurality of application screens included in the application screen history 3010. The server 3000 may generate a UI map 3050 by using the UI map generator 3030. The server 3000 may identify a focus position 3060 by using the focus position estimator 3040. A method, performed by the second server 3000, of analyzing an application screen by using the UI map generator 3030 and the focus position estimator 3040 is the same as the operation described above with reference to FIGS. 1, 2, 3A, 3B, 4A, 4B, 5A, 5B, 5C, 6, 7A, 7B, and 7C, performed by the electronic device 2000, of analyzing an application screen by using the UI map generator 430 and the focus position estimator 440, and thus a repeated description thereof will be omitted.

Referring to FIG. 8D, an application may be executed in the second electronic device 1200 and displayed on the second electronic device 1200. The application executed in the second electronic device 1200 may be a third-party application not provided with an API.

According to an embodiment of the disclosure, because both the second electronic device 1200 in which the application is executed and a third electronic device 1300 capable of communicating with the second electronic device 1200 have low hardware specifications, the second electronic device 1200 and the third electronic device 1300 may analyze an application screen 1210 in parallel in order to more accurately and quickly the application screen 1210.

According to an embodiment of the disclosure, the second electronic device 1200 may transmit at least one application screen stored in the application screen history 1211 to the third electronic device 1300. The second electronic device 1200 may transmit at least one primitive action stored in the primitive action history 1220 to the third electronic device 1300.

According to an embodiment of the disclosure, the second electronic device 1200 may generate a first UI map 1251 by using the UI map generator 1230. The third electronic device 1300 may generate a second UI map 1351 by using a UI map generator 1330.

According to an embodiment of the disclosure, the first UI map 1251 or the second UI map 1351 may be provided to another electronic device that generates no UI maps. For example, when the second electronic device 1200 generates the first UI map 1251 and the third electronic device 1300 does not generate the second UI map 1351, the first UI map 1251 generated by the second electronic device 1200 may be transmitted to the third electronic device 1300.

According to an embodiment of the disclosure, the first UI map 1251 and the second UI map 1351 may be generated based on some of a plurality of application screen needing to be actually analyzed. For example, a total of 100 application screens included in the application screen history 1211 need to be analyzed to generate a UI map, and the second electronic device 1200 may generate the first UI map 1251, based on 50 application screens among the 100 application screens and the third electronic device 1300 may generate the second UI map 1351, based on the remaining 50 application screens.

According to an embodiment of the disclosure, at least one of the second electronic device 1200 or the third electronic device 1300 may include a UI map ensemble model (not shown) for combining the first UI map 1251 with the second UI map 1351. Thus, when the first UI map 1251 and the second UI map 1252 are UI maps generated based on some of a plurality of application screens needing to be actually analyzed, at least one of the second electronic device 1200 or the third electronic device 1300 may generate an incorporated UI map corresponding to a combination of the first UI map 1251 and the second UI map 1351 through the UI map ensemble model (not shown). The incorporated UI map may be provided to another electronic device in which no incorporated UI maps are generated.

According to an embodiment of the disclosure, the second electronic device 1200 may identify a first focus position 1261 by using the focus position estimator 1240. The third electronic device 1300 may identify a second focus position 1361 by using a focus position estimator 1340.

According to an embodiment of the disclosure, when the focus position estimator 1240 of the second electronic device 1200 or the focus position estimator 1340 of the third electronic device 1300 identifies a focus position, based on a UI map, the focus position estimator 1240 of the second electronic device 1200 or the focus position estimator 1340 of the third electronic device 1300 may identify a focus position, based on a UI map provided by another electronic device.

According to an embodiment of the disclosure, the focus position estimator 1240 of the second electronic device 1200 and the focus position estimator 1340 of the third electronic device 1300 may generate information for identifying focuses in different dimensions, and identify the position of the focus, based on the information. For example, the focus position estimator 1240 of the second electronic device 1200 may generate information about a focus positioning probability for each of a plurality of nodes corresponding to a plurality of UI elements included in an application screen by using a graph-based focus position identification model. The focus position estimator 1340 of the third electronic device 1300 may generate information about a focus positioning probability for each of a plurality of regions included in the application screen 723 by using a vision-based focus position identification model.

According to an embodiment of the disclosure, at least one of the second electronic device 1200 or the third electronic device 1300 may include a focus position ensemble model (not shown) for combining pieces of information for identifying a focus position. When the focus position estimator 1240 of the second electronic device 1200 and the focus position estimator 1340 of the third electronic device 1300 generate information for identifying focuses in different dimensions, at least one of the second electronic device 1200 or the third electronic device 1300 may combine pieces of information for identifying focus positions of different dimensions with each other through the focus position ensemble model (not shown) to thereby generate new information for identifying a focus position. At least one of the second electronic device 1200 or the third electronic device 1300 may identify the position of the focus, based on the generated new information.

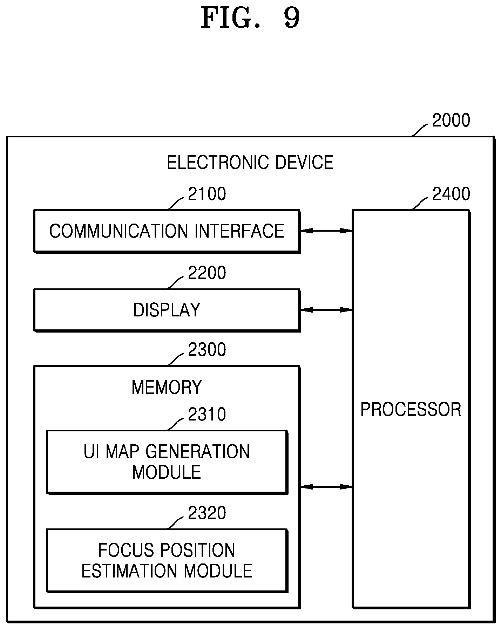

FIG. 9 is a block diagram of an electronic device 2000 according to an embodiment of the disclosure.

Referring to FIG. 9, the electronic device 2000 may include a communication interface 2100, a display 2200, a memory 2300, and a processor 2400.

The communication interface 2100 may perform data communication with other electronic devices under a control by the processor 2400.

The communication interface 2100 may include a communication circuit. The communication interface 2100 may perform data communication with the server or the other electronic devices by using at least one of data communication methods including, for example, a wired LAN, a wireless LAN, Wi-Fi, Bluetooth, Zigbee, Wi-Fi Direct (WFD), infrared communication (IrDA), Bluetooth Low Energy (BLE), Near Field Communication (NFC), Wireless Broadband Internet (Wibro), World Interoperability for Microwave Access (WiMAX), a shared wireless access protocol (SWAP), Wireless Gigabit Alliances (WiGig), and RF communication.

According to an embodiment of the disclosure, the communication interface 2100 may transmit or receive, to or from an external electronic device, data for analyzing an application screen. For example, when an application screen executed by the electronic device 2000 is analyzed by the external electronic device, the communication interface 2100 may transmit the application screen and a primitive action to the external electronic device. On the other hand, when an application screen executed by the external electronic device is analyzed by the electronic device 2000, the communication interface 2100 may receive the application screen and a primitive action from the external electronic device. The communication interface 2100 may transmit or receive, to or from the external electronic device, an AI model used to analyze the application screen and training data for training the AI model.

The display 2200 may output an image signal to the screen of the electronic device 2000 under the control by the processor 2400. The display 2200 may display the application screen, and, as at least one primitive action is executed, the application screen displayed on the display 2200 may be converted.

Instructions, a data structure, and program code readable by the processor 2400 may be stored in the memory 2300. According to disclosed embodiments, operations performed by the processor 2400 may be implemented by executing the instructions or codes of a program stored in the memory 2300.

The memory 2300 may include a flash memory type, a hard disk type, a multimedia card micro type, and a card type memory (for example, a secure digital (SD) or extreme digital (XD) memory), and may include a non-volatile memory including at least one of a read-only memory (ROM), an electrically erasable programmable ROM (EEPROM), a programmable ROM (PROM), magnetic memory, a magnetic disk, or an optical disk, and a volatile memory such as a random access memory (RAM) or a static random access memory (SRAM).

The memory 2300 according to an embodiment of the disclosure may store one or more instructions and/or programs necessary for analyzing an application screen. For example, the memory 2300 may store a UI map generation module 2310 and a focus position estimation module 2320, and each module may include one or more AI models for performing the functions of the module. For example, the UI map generation module 2310 may include a link removal model, a link generation model, an edge labeler, etc. The focus position estimation module 2320 may include a graph-based focus position identification model, a vision-based focus position identification model, etc. The memory 2300 may store an application screen history and a primitive action history needed by the electronic device 2000 to analyze an application screen.

The processor 2400 may control overall operations of the electronic device 2000. For example, the processor 2400 may control overall operations of the electronic device 200 for analyzing an application screen, by executing the one or more instructions of the program stored in the memory 2300. One or more processors 2400 may be included.

At least one processor 2400 may include, but are not limited to, at least one of a central processing unit, a microprocessor, a graphics processing unit, application specific integrated circuits (ASICs), digital signal processors (DSPs), digital signal processing devices (DSPDs), programmable logic devices (PLDs), field programmable gate arrays (FPGAs), an application processor, a neural processing unit, or an AI dedicated processor designed with a hardware structure specialized for processing an AI model.

According to an embodiment of the disclosure, the at least one processor 2400 may generate a plurality of links for a plurality of UI elements included in the application screen. The at least one processor 2400 may generate a UI map for each of at least one primitive action that is a user input for navigating the application screen, based on the plurality of links. The at least one processor 2400 may identify the position of a focus indicating a UI element with which the user is to interact among the plurality of UI elements. The UI map may include a route through which the position of the focus moves between the plurality of UI elements by the at least one primitive action.

According to an embodiment of the disclosure, the at least one processor 2400 may identify the plurality of UI elements, based on the application screen. The at least one processor 2400 may generate a plurality of nodes corresponding to the plurality of UI elements. The at least one processor 2400 may generate a plurality of links, based on node features of the plurality of nodes. The node feature may include at least one of features regarding sizes, positions, content, images, names, and hierarchy of the plurality of UI elements.

According to an embodiment of the disclosure, the at least one processor 2400 may generate the plurality of links by using the link removal model. The link generation model may be a model trained to generate the plurality of links by receiving a node feature and a fully connected edge for a plurality of nodes and removing at least one link included in the fully connected edge. The fully connected edge may include links of a plurality of UI elements to themselves, and all links between different UI elements.

According to an embodiment of the disclosure, the at least one processor 2400 may generate the plurality of links by using the link generation model. The link generation model may be a model trained to perform hierarchical clustering with respect to the plurality of nodes by receiving the node feature and generate the plurality of links by connecting nodes clustered in the same layer to each other in each operation of the hierarchical clustering.

According to an embodiment of the disclosure, the at least one processor 2400 may map at least one primitive action to each of the plurality of links. The at least one processor 2400 may generate the UI map, based on what primitive action has been mapped to each of the plurality of links.

According to an embodiment of the disclosure, the at least one processor 2400 may generate an adjacency matrix by using the edge labeler. The edge labeler may be a model trained to receive an edge for a plurality of nodes including a plurality of links to output a UI map.

According to an embodiment of the disclosure, the at least one processor 2400 may identify the position of the focus from an application screen at a last time point, based on the respective application screens for the plurality of time points distinguished based on the time point when the at least one primitive action has been performed and at least one primitive action performed before the last time point among the plurality of time points.

According to an embodiment of the disclosure, the at least one processor 2400 may identify a focus position by using at least one of the graph-based focus position identification model or the vision-based focus position identification model.

According to an embodiment of the disclosure, the graph-based focus position identification model may include a feature extraction model for outputting first focus feature matrices for the plurality of time points including focus features, a feature attention model for outputting second focus feature matrices in which focus features are emphasized, and a feature comparison model for outputting probabilities that a focus is to be positioned on each of the plurality of nodes. The focus feature may include a feature associated with the position of the focus obtained from the plurality of UI elements.

According to an embodiment of the disclosure, the feature extraction model may be a model trained to extract a focus feature from each of a plurality of application screens by receiving the plurality of application screens, and output the first focus feature matrices for the plurality of time points by mapping the focus feature to a node corresponding to a UI element from which the focus feature is obtained.

According to an embodiment of the disclosure, the feature attention model may be a model trained to generate one or more transformed first focus feature matrices by receiving the first focus feature matrices for the time points excluding the last time point among the plurality of time points and the UI map for the at least one primitive action performed from at least one time point among the plurality of time points to the last time point, and output the second focus feature matrix by combining the one or more transformed first focus feature matrices with the first focus feature matrix at the last time point.

According to an embodiment of the disclosure, the feature comparison model may be a model trained to output the probability that a focus is positioned on each of the plurality of nodes by receiving a first focus feature matrix and a second focus feature matrix of the last time point among the plurality of time points.

According to an embodiment of the disclosure, the vision-based focus position identification model may be a model trained to output a focus positioning probability for each of a plurality of regions included in an application screen at the last time point by receiving the application screens for the plurality of time points and the performed at least one primitive action.

According to an embodiment of the disclosure, the at least one processor 2400 may receive the application screen from the external electronic device via the communication interface 2100. The at least one processor 2400 may transmit at least one of the UI map or the position of the focus to the external electronic device via the communication interface 2100.

According to an embodiment of the disclosure, the application screen may be displayed, on the display 2200, as an execution screen of a third-party application not provided with an API.

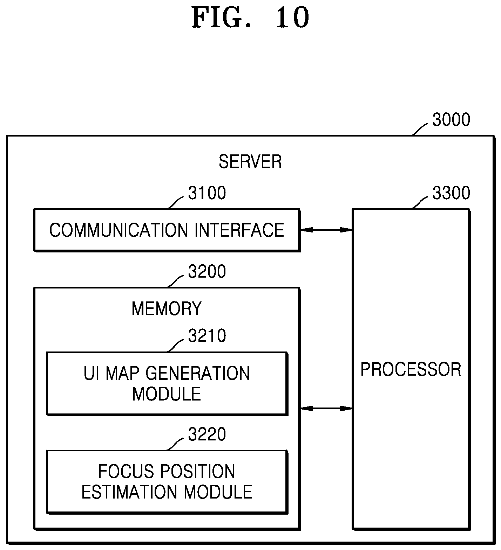

FIG. 10 is a block diagram of a server 3000 according to an embodiment of the disclosure.

Referring to FIG. 10, according to an embodiment of the disclosure, operations of the electronic device 2000 may be performed by the server 3000.

The server 3000 according to an embodiment of the disclosure may include a communication interface 3100, a memory 3200, and a processor 3300. The communication interface 3100, the memory 3200, and the processor 3300 of the server 3000 correspond to the communication interface 2100, the memory 2300, and the processor 2400 of the electronic device 2000 of FIG. 9, respectively, and thus redundant descriptions thereof will be omitted.

The server 3000 according to an embodiment of the disclosure may have a higher computing performance than the electronic device 2000 to enable it to perform a calculation with a greater amount of computation than the electronic device 2000. The server 3000 may perform training of an AI model, which requires a relatively large amount of computation compared to inference.

The memory 3200 may include a UI map generation module 3210 and a focus position estimation module 3220.

According to an embodiment of the disclosure, there is provided a method of analyzing an application screen.

According to an embodiment of the disclosure, the method of analyzing the application screen may include generating a plurality of links for a plurality of UI elements included in the application screen, generating a UI map for each of at least one primitive action, which is a user input for navigating the application screen, based on the plurality of links, and identifying a position of a focus indicating a UI element with which a user is to interact among the plurality of UI elements. The UI map may include a route through which the position of the focus moves between the plurality of UI elements by the at least one primitive action.

According to an embodiment of the disclosure, the generating of the plurality of links may include identifying the plurality of UI elements, based on the application screen, generating a plurality of nodes corresponding to the plurality of UI elements, and generating the plurality of links, based on a node feature of the plurality of nodes. The node feature may include at least one of features regarding sizes, positions, content, images, names, and hierarchy of the plurality of UI elements.

According to an embodiment of the disclosure, the generating of the plurality of links, based on the node feature may include generating the plurality of links by using a link removal model. The link removal model may be a model trained to generate the plurality of links by receiving a node feature and a fully connected edge for a plurality of nodes and removing at least one link included in the fully connected edge. The fully connected edge may include links of a plurality of UI elements to themselves, and all links between different UI elements.

According to an embodiment of the disclosure, the generating of the plurality of links, based on the node feature may include generating the plurality of links by using a link generation model. The link generation model may be a model trained to perform hierarchical clustering with respect to the plurality of nodes by receiving the node feature and generate the plurality of links by connecting nodes clustered in the same layer to each other in each operation of the hierarchical clustering.

According to an embodiment of the disclosure, the generating of the UI map may include mapping the at least one primitive action for each of the plurality of links, and generating the UI map, based on what primitive action has been mapped to each of the plurality of links.

According to an embodiment of the disclosure, the generating of the UI map may include generating an adjacency matrix by using an edge labeler. The edge labeler may be a model trained to receive an edge for a plurality of nodes including a plurality of links to output a UI map.

According to an embodiment of the disclosure, the identifying of the position of the focus may include identifying the position of the focus from an application screen at a last time point, based on the respective application screens for the plurality of time points distinguished based on the time point when the at least one primitive action has been performed and at least one primitive action performed before the last time point among the plurality of time points.

According to an embodiment of the disclosure, the identifying of the focus position from the application screen at the last time point may include identifying the position of the focus by using at least one of a graph-based focus position identification model or a vision-based focus position identification model.

According to an embodiment of the disclosure, the graph-based focus position identification model may include a feature extraction model for outputting first focus feature matrices for the plurality of time points including focus features, a feature attention model for outputting second focus feature matrices in which focus features are emphasized, and a feature comparison model for outputting probabilities that a focus is to be positioned on each of the plurality of nodes. The focus feature may include a feature associated with the position of the focus obtained from the plurality of UI elements.

According to an embodiment of the disclosure, the feature extraction model may be a model trained to extract a focus feature from each of a plurality of application screens by receiving the plurality of application screens, and output the first focus feature matrices for the plurality of time points by mapping the focus feature to a node corresponding to a UI element from which the focus feature is obtained.

According to an embodiment of the disclosure, the feature attention model may be a model trained to generate one or more transformed first focus feature matrices by receiving the first focus feature matrices for the time points excluding the last time point among the plurality of time points and the UI map for the at least one primitive action performed from at least one time point among the plurality of time points to the last time point, and output the second focus feature matrix by combining the one or more transformed first focus feature matrices with the first focus feature matrix at the last time point.

According to an embodiment of the disclosure, the feature comparison model may be a model trained to output the probability that a focus is positioned on each of the plurality of nodes by receiving a first focus feature matrix and a second focus feature matrix of the last time point among the plurality of time points.

According to an embodiment of the disclosure, the vision-based focus position identification model may be a model trained to output a focus positioning probability for each of a plurality of regions included in an application screen at the last time point by receiving the application screens for the plurality of time points and the performed at least one primitive action.

Embodiments of the disclosure can also be embodied as a storage medium including instructions executable by a computer such as a program module executed by the computer. A computer readable medium can be any available medium which can be accessed by the computer and includes all volatile/non-volatile and removable/non-removable media. Further, the computer readable medium may include all computer storage and communication media. The computer storage medium includes all volatile/non-volatile and removable/non-removable media embodied by a certain method or technology for storing information such as computer readable instruction, a data structure, a program module or other data. Communication media may typically include computer readable instructions, data structures, or other data in a modulated data signal, such as program modules.

In addition, computer-readable storage media may be provided in the form of non-transitory storage media. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While the disclosure has been shown and described with reference to various embodiments thereof, it will be understood by those skilled in the art that various changes in form and details may be made therein without departing from the spirit and scope of the disclosure as defined by the appended claims.

## Claims

1. A method of analyzing an application screen (510), the method comprising:
generating a plurality of links for a plurality of user interface (UI) elements (511-1, 511-2, 511-3) included in the application screen (510) (S210);
generating a UI map (450) for each of at least one primitive action (340), which is a user input for navigating the application screen (510), based on the plurality of links (S220); and
identifying positions (460-1, 460-2) of a focus indicating UI elements with which a user is to interact among the plurality of UI elements (511-1, 511-2, 511-3) (S230),
wherein the UI map comprises a route via which the positions (460-1, 460-2) of the focus move between the plurality of UI elements (511-1, 511-2, 511-3) by the at least one primitive action.

2. The method of claim 1,
wherein the generating of the plurality of links comprises:
identifying the plurality of UI elements, based on the application screen;
generating a plurality of nodes corresponding to the plurality of UI elements; and
generating the plurality of links, based on a node feature of the plurality of nodes, and
wherein the node feature comprises at least one of features regarding sizes, positions, content, images, names, or hierarchy of the plurality of UI elements.

3. The method of claim 2,
wherein, based on the node feature, the generating of the plurality of links comprises generating the plurality of links by using a link removal model,
wherein the link removal model is a model trained to:
generate the plurality of links by receiving the node feature and a fully connected edge for the plurality of nodes, and
remove at least one link included in the fully connected edge, and
wherein the fully connected edge comprises links of a plurality of UI elements connected to themselves, and all links between different UI elements.

4. The method of claim 2 or 3,
wherein, based on the node feature, the generating of the plurality of links comprises generating the plurality of links by using a link generation model, and
wherein the link generation model is a model trained to:
perform hierarchical clustering with respect to the plurality of nodes by receiving the node feature, and
generate the plurality of links by connecting nodes clustered in the same layer with each other in each operation of the hierarchical clustering.

5. The method of any one of claims 1 through 4, wherein the generating of the UI map comprises:
mapping the at least one primitive action for each of the plurality of links; and
generating the UI map, based on what primitive action has been mapped to each of the plurality of links.

6. The method of any one of claims 2 through 4, wherein
wherein the generating of the UI map comprises generating the UI map by using an edge labeler, and
wherein the edge labeler is a model trained to receive an edge for a plurality of nodes including the plurality of links to output the UI map.

7. The method of any one of claims 1 through 6, wherein the identifying of the position of the focus comprises identifying the positions of the focus from an application screen at a last time point, based on respective application screens for a plurality of time points distinguished based on a time point when the at least one primitive action has been performed and at least one primitive action performed before the last time point among the plurality of time points.

8. The method of claim 7, wherein the identifying of the positions of the focus from the application screen at the last time point comprises identifying the position of the focus by using at least one of a graph-based focus position identification model or a vision-based focus position identification model.

9. The method of claim 8,
wherein the graph-based focus position identification model comprises:
a feature extraction model configured to output first focus feature matrices for the plurality of time points including a focus feature,
a feature attention model configured to output second focus feature matrices in which the focus feature has been emphasized, and
a feature comparison model configured to output a probability that the focus is to be positioned on each of a plurality of nodes, and
wherein the focus feature comprises a feature associated with the position of the focus obtained from the plurality of UI elements.

10. The method of claim 9, wherein the feature extraction model is a model trained to:
extract the focus feature from each of the application screens for the plurality of time points by receiving the application screens; and
output the first focus feature matrices for the plurality of time points by mapping the focus feature to a node corresponding to a UI element from which the focus feature is obtained.

11. The method of claim 9 or 10, wherein the feature attention model is a model trained to:
generate at least one transformed first focus feature matrix by receiving first focus feature matrices for the time points excluding the last time point among the plurality of time points and the UI map for at least one primitive action performed from the time points excluding the last time point among the plurality of time points to the last time point; and
output a second focus feature matrix by comparing the at least one transformed first focus feature matrix with the first focus feature matrix of the last time point.

12. The method of one of claims 9 through 11, wherein the feature comparison model is a model trained to output the probability that the focus is positioned on each of the plurality of nodes by receiving the first focus feature matrix and the second focus feature matrix of the last time point.

13. The method of any one of claims 8 through 12, wherein the vision-based focus position identification model is a model trained to output a probability that the focus is positioned on each of a plurality of regions included in an application screen at the last time point by receiving the application screens for the plurality of time points and at least one primitive action performed before a last point.

14. An electronic device (2000) for analyzing an application screen (510), the electronic device (2000) comprising:
a memory (2300) storing one or more instructions; and
at least one processor (2400) configured to execute at least one instruction stored in the memory (2300),
wherein the at least one processor (2400) is configured to:
generate a plurality of links for a plurality of user interface (UI) elements (511-1, 511-2, 511-3) included in the application screen (510);
generate a UI map (450) for each of at least one primitive action (340), which is a user input for navigating the application screen (510), based on the plurality of links; and
identify positions (460-1, 460-2) of a focus indicating UI elements with which a user is to interact among the plurality of UI elements (511-1, 511-2, 511-3), and
wherein the UI map (450) comprises a route via which the positions (460-1, 460-2) of the focus move between the plurality of UI elements (511-1, 511-2, 511-3) by the at least one primitive action (340).

15. A computer-readable recording medium having recorded thereon a computer program, which, when executed by a computer, performs the method of any one of claims 1 to 13.

## Patentansprüche

1. Verfahren zum Analysieren eines Anwendungsbildschirms (510), wobei das Verfahren Folgendes umfasst:
Erzeugen mehrerer Verknüpfungen für mehrere Benutzeroberflächen (Ul)-Elemente (511-1, 511-2, 511-3), die in dem Anwendungsbildschirm (510) enthalten sind (S210);
Erzeugen einer UI-Abbildung (450) für jede von mindestens einer primitiven Aktion (340), bei der es sich um eine Benutzereingabe zum Navigieren auf dem Anwendungsbildschirm (510) handelt, basierend auf den mehreren Verknüpfungen (S220); und
Identifizieren von Positionen (460-1, 460-2) eines Fokus, der UI-Elemente unter den mehreren UI-Elementen (511-1, 511-2, 511-3) anzeigt, mit denen ein Benutzer interagieren soll (S230),
wobei die Ul-Abbildung eine Route umfasst, über die sich die Positionen (460-1, 460-2) des Fokus durch die mindestens eine primitive Aktion zwischen den mehreren Ul-Elementen (511-1, 511-2, 511-3) bewegen.

2. Verfahren nach Anspruch 1,
wobei das Erzeugen der mehreren Verknüpfungen Folgendes umfasst:
Identifizieren der mehreren Ul-Elemente auf der Grundlage des Anwendungsbildschirms;
Erzeugen mehrerer Knoten, die den mehreren Ul-Elementen entsprechen; und
Erzeugen der mehreren Verknüpfungen auf der Grundlage eines Knotenmerkmals der mehreren Knoten, und
wobei das Knotenmerkmal mindestens eines der Merkmale hinsichtlich Größen, Positionen, Inhalt, Bilder, Namen oder Hierarchie der mehreren UI-Elemente umfasst.

3. Verfahren nach Anspruch 2,
wobei das Erzeugen der mehreren Verknüpfungen auf der Grundlage des Knotenmerkmals das Erzeugen der mehreren Verknüpfungen unter Verwendung eines Verknüpfungsentfernungsmodells umfasst,
wobei das Verknüpfungsentfernungsmodell ein Modell ist, das darauf trainiert ist,
die mehreren Verknüpfungen durch Empfangen des Knotenmerkmals und einer vollständig verbundenen Kante für die mehreren Knoten zu erzeugen und
mindestens eine Verknüpfung, die in der vollständig verbundenen Kante enthalten ist, zu entfernen, und
wobei die vollständig verbundene Kante Verknüpfungen mehrerer UI-Elemente, die mit sich selbst verbunden sind, sowie alle Verknüpfungen zwischen verschiedenen UI-Elementen umfasst.

4. Verfahren nach Anspruch 2 oder 3,
wobei das Erzeugen der mehreren Verknüpfungen auf der Grundlage des Knotenmerkmals das Erzeugen der mehreren Verknüpfungen unter Verwendung eines Verknüpfungserzeugungsmodells umfasst, und
wobei das Verknüpfungserzeugungsmodell ein Modell ist, das darauf trainiert ist, hierarchisches Clustering in Bezug auf die mehreren Knoten durch Empfangen des Knotenmerkmals durchzuführen und
die mehreren Verknüpfungen zu erzeugen, indem Knoten, die in derselben Schicht geclustert sind, in jedem Betrieb des hierarchischen Clusterings miteinander verbunden werden.

5. Verfahren nach einem der Ansprüche 1 bis 4, wobei das Erzeugen der UI-Abbildung Folgendes umfasst:
Abbilden der mindestens einen primitiven Aktion für jede der mehreren Verknüpfungen; und
Erzeugen der Ul-Abbildung auf der Grundlage dessen, welche primitive Aktion auf jede der mehreren Verknüpfungen abgebildet wird.

6. Verfahren nach einem der Ansprüche 2 bis 4, wobei
das Erzeugen der UI-Abbildung das Erzeugen der Ul-Abbildung unter Verwendung eines Kantenbeschrifters umfasst, und
der Kantenbeschrifter ein Modell ist, das darauf trainiert ist, eine Kante für mehrere Knoten einschließlich der mehreren Verknüpfungen zu empfangen, um die UI-Abbildung auszugeben.

7. Verfahren nach einem der Ansprüche 1 bis 6, wobei das Identifizieren der Position des Fokus das Identifizieren der Positionen des Fokus aus einem Anwendungsbildschirm zu einem letzten Zeitpunkt umfasst, basierend auf jeweiligen Anwendungsbildschirmen für mehrere Zeitpunkte, die anhand eines Zeitpunkts unterschieden werden, zu dem die mindestens eine primitive Aktion ausgeführt wird, und mindestens einer primitiven Aktion, die vor dem letzten Zeitpunkt unter den mehreren Zeitpunkten ausgeführt wird.

8. Verfahren nach Anspruch 7, wobei das Identifizieren der Positionen des Fokus aus dem Anwendungsbildschirm zum letzten Zeitpunkt das Identifizieren der Position des Fokus unter Verwendung mindestens eines von einem graphbasierten Fokuspositionsidentifizierungsmodell und einem visionbasierten Fokuspositionsidentifizierungsmodell umfasst.

9. Verfahren nach Anspruch 8,
wobei das graphbasierte Fokuspositionsidentifizierungsmodell Folgendes umfasst:
ein Merkmalsextraktionsmodell, das dazu konfiguriert ist, erste Fokusmerkmalmatrizen für die mehreren Zeitpunkte einschließlich eines Fokusmerkmals auszugeben,
ein Merkmalsaufmerksamkeitsmodell, das dazu konfiguriert ist, zweite Fokusmerkmalmatrizen, in denen das Fokusmerkmal hervorgehoben wird, auszugeben, und
ein Merkmalvergleichsmodell, das dazu konfiguriert ist, eine Wahrscheinlichkeit, mit der der Fokus auf jedem von mehreren Knoten positioniert werden soll, auszugeben, und
wobei das Fokusmerkmal ein Merkmal umfasst, das mit der Position des von den mehreren Ul-Elementen erhaltenen Fokus verknüpft ist.

10. Verfahren nach Anspruch 9, wobei das Merkmalsextraktionsmodell ein Modell ist, das darauf trainiert ist,
das Fokusmerkmal aus jedem der Anwendungsbildschirme für die mehreren Zeitpunkte durch Empfangen der Anwendungsbildschirme zu extrahieren; und
die ersten Fokusmerkmalmatrizen für die mehreren Zeitpunkte durch Abbilden des Fokusmerkmals auf einen Knoten auszugeben, der einem Ul-Element entspricht, von dem das Fokusmerkmal erhalten wird.

11. Verfahren nach Anspruch 9 oder 10, wobei das Merkmalsaufmerksamkeitsmodell ein Modell ist, das darauf trainiert ist,
mindestens eine transformierte erste Fokusmerkmalsmatrix zu erzeugen, indem erste Fokusmerkmalsmatrizen für die Zeitpunkte mit Ausnahme des letzten Zeitpunkts unter den mehreren Zeitpunkten und die UI-Abbildung für mindestens eine primitive Aktion, die von den Zeitpunkten mit Ausnahme des letzten Zeitpunkts unter den mehreren Zeitpunkten bis zum letzten Zeitpunkt ausgeführt wird, empfangen werden; und
eine zweite Fokusmerkmalsmatrix durch Vergleichen der mindestens einen transformierten ersten Fokusmerkmalsmatrix mit der ersten Fokusmerkmalsmatrix des letzten Zeitpunkts auszugeben.

12. Verfahren nach einem der Ansprüche 9 bis 11, wobei das Merkmalsvergleichsmodell ein Modell ist, das darauf trainiert ist, die Wahrscheinlichkeit, mit der der Fokus auf jedem der mehreren Knoten positioniert werden soll, durch Empfangen der ersten Fokusmerkmalsmatrix und der zweiten Fokusmerkmalsmatrix des letzten Zeitpunkts auszugeben.

13. Verfahren nach einem der Ansprüche 8 bis 12, wobei das visionbasierte Fokuspositionsidentifizierungsmodell ein Modell ist, das darauf trainiert ist, eine Wahrscheinlichkeit, mit der der Fokus auf jedem von mehreren, in einem Anwendungsbildschirm enthaltenen Bereichen zum letzten Zeitpunkt positioniert werden soll, auszugeben, indem die Anwendungsbildschirme für die mehreren Zeitpunkte und mindestens eine primitive Aktion, die vor einem letzten Zeitpunkt ausgeführt wird, empfangen werden.

14. Elektronisches Gerät (2000) zum Analysieren eines Anwendungsbildschirms (510), wobei das elektronische Gerät (2000) Folgendes umfasst:
einen Speicher (2300), in dem ein oder mehrere Befehle gespeichert sind; und
mindestens einen Prozessor (2400), der dazu konfiguriert ist, mindestens einen im Speicher (2300) gespeicherten Befehl auszuführen,
wobei der mindestens eine Prozessor (2400) dazu konfiguriert ist,
mehrere Verknüpfungen für mehrere Benutzeroberflächen (Ul)-Elemente (511-1, 511-2, 511-3), die in dem Anwendungsbildschirm (510) enthalten sind, zu erzeugen;
eine UI-Abbildung (450) für jede von mindestens einer primitiven Aktion (340) , bei der es sich um eine Benutzereingabe zum Navigieren auf dem Anwendungsbildschirm (510) handelt, basierend auf den mehreren Verknüpfungen zu erzeugen; und
Positionen (460-1, 460-2) eines Fokus, der Ul-Elemente unter den mehreren UI-Elementen (511-1, 511-2, 511-3) anzeigt, mit denen ein Benutzer ein Benutzer interagieren soll, zu identifizieren, und
wobei die Ul-Abbildung (450) eine Route umfasst, über die sich die Positionen (460-1, 460-2) des Fokus durch die mindestens eine primitive Aktion (340) zwischen den mehreren Ul-Elementen (511-1, 511-2, 511-3) bewegen.

15. Computerlesbares Aufzeichnungsmedium, auf dem ein Computerprogramm aufgezeichnet ist, das, wenn es von einem Computer ausgeführt wird, das Verfahren nach einem der Ansprüche 1 bis 13 ausführt.

## Revendications

1. Procédé d'analyse d'un écran d'application (510), le procédé consistant à :
générer une pluralité de liens pour une pluralité d'éléments d'interface utilisateur (UI) (511-1, 511-2, 511-3) inclus dans l'écran d'application (510) (S210) ;
générer une carte UI (450) pour chacune d'au moins une action primitive (340), qui est une entrée utilisateur pour naviguer sur l'écran d'application (510), sur la base de la pluralité de liens (S220) ; et
identifier des positions (460-1, 460-2) d'un focus indiquant des éléments UI avec lesquels un utilisateur est pour but d'interagir parmi la pluralité d'éléments UI (511-1, 511-2, 511-3) (S230),
dans lequel la carte UI comprend une route via laquelle les positions (460-1, 460-2) du focus se déplacent entre la pluralité d'éléments UI (511-1, 511-2, 511-3) par l'au moins une action primitive.

2. Procédé selon la revendication 1,
dans lequel la génération de la pluralité de liens consiste à :
identifier la pluralité d'élément UI, sur la base de l'écran d'application ;
générer une pluralité de nœuds correspondant à la pluralité d'éléments UI ; et
générer la pluralité de liens, sur la base d'une caractéristique de nœud de la pluralité de nœuds, et
dans lequel la caractéristique de nœud comprend au moins un des caractéristiques concernant des tailles, des positions, des contenus, des images, des noms, ou une hiérarchie de la pluralité d'éléments UI.

3. Procédé selon la revendication 2,
dans lequel, sur la base de la caractéristique de nœud, la génération de la pluralité de liens comprend la génération de la pluralité de liens en utilisant un modèle d'élimination de lien,
dans lequel le modèle d'élimination de lien est un modèle entraîné pour :
générer la pluralité de liens en recevant la caractéristique de nœuds et un bord complètement connecté de nœuds, et
éliminer au moins un lien inclus dans le bord complètement connecté, et
dans lequel le bord complètement connecté comprend des liens d'une pluralité d'éléments UI connectés à eux-mêmes, et tous les liens entre différents éléments UI.

4. Procédé selon la revendication 2 ou 3,
dans lequel, sur la base de la caractéristique de nœud, la génération de la pluralité de liens comprend la génération de la pluralité de liens en utilisant un modèle de génération de lien, et
dans lequel le modèle de génération de lien est un modèle entraîné pour :
effectuer un regroupement hiérarchique par rapport à la pluralité de nœuds en recevant la caractéristique de nœud, et
générer la pluralité de liens en connectant des nœuds regroupés dans la même couche l'un à l'autre lors de chaque opération du regroupement hiérarchique.

5. Procédé selon l'une quelconque des revendications 1 à 4, dans lequel la génération de la carte UI consiste à :
associer l'au moins une action primitive à chacun de la pluralité de liens ; et
générer la carte Ul, sur la base de quelle action primitive a été associée à chacun de la pluralité de liens.

6. Procédé selon l'une quelconque des revendications 2 à 4, dans lequel
la génération de la carte UI consiste à générer la carte UI en utilisant une étiqueteuse de bord, et
l'étiqueteuse de bord est un modèle entraîné pour recevoir un bord pour une pluralité de nœuds comportant la pluralité de liens pour produire la carte Ul.

7. Procédé selon l'une quelconque des revendications 1 à 6, dans lequel l'identification de la position du focus consiste à identifier les positions du focus à partir d'un écran d'application à un dernier point temporel, sur la base des écrans d'application respectifs pour une pluralité de points temporels distingués sur la base d'un point temporel lorsque l'au moins une action primitive a été effectuée et au moins une action primitive effectuée avant le dernier point temporel parmi la pluralité de points temporels.

8. Procédé selon la revendication 7, dans lequel l'identification des positions du focus à partir de l'écran d'application au dernier point temporel consiste à identifier la position du focus en utilisant au moins une d'un modèle d'identification de position de focus basé sur un graphe ou d'un modèle d'identification de position de focus basé sur une vision.

9. Procédé selon la revendication 8,
dans lequel le modèle d'identification de position de focus basé sur un graphe comprenant :
un modèle d'extraction de caractéristique configuré pour produire des premières matrices de caractéristique de focus pour la pluralité de points temporels comportant une caractéristique de focus,
un modèle d'attention à caractéristique configuré pour produire des secondes matrices de caractéristique de focus dans lesquelles la caractéristique de focus a été soulignée, et
un modèle de comparaison de caractéristique configuré pour produire une probabilité que le focus soit positionné sur chacun d'une pluralité de nœuds, et
dans lequel la caractéristique de focus comprend une caractéristique associée à la position du focus obtenue à partir de la pluralité d'éléments UI.

10. Procédé selon la revendication 9, dans lequel le modèle d'extraction de caractéristique est un modèle entraîné pour :
extraire la caractéristique de focus à partir de chacun des écrans d'application pour la pluralité de points temporels en recevant les écrans d'application ; et
produire des premières matrices de caractéristique de focus pour la pluralité de points temporels en associant la caractéristique de focus à un noeud correspondant à un élément UI à partir duquel la caractéristique de focus est obtenue.

11. Procédé selon la revendication 9 ou 10, dans lequel le modèle d'attention à caractéristique est un modèle entraîné pour :
générer au moins une première matrice de caractéristique de focus transformée en recevant des premières matrices de caractéristique de focus pour les points temporels à l'exclusion du dernier point temporel parmi la pluralité de points temporels et la carte UI pour au moins une action primitive effectuée à partir des points temporels à l'exclusion du dernier point temporel parmi la pluralité de points temporels jusqu'au dernier point temporel ; et
produire une seconde matrice de caractéristique de focus en comparant l'au moins une première matrice de caractéristique de focus transformée avec la première matrice de caractéristique de focus du dernier point temporel.

12. Procédé selon la revendication 9 à 11, dans lequel modèle de comparaison de caractéristique est un modèle entraîné pour produire la probabilité que le focus soit positionné sur chacun de la pluralité de nœuds en recevant les premières matrices de caractéristique de focus et les secondes matrices de caractéristique de focus du dernier point temporel.

13. Procédé selon l'une quelconque des revendications 8 à 12, dans lequel le modèle d'identification de position de focus basé sur une vision est un modèle entraîné pour produire une probabilité que le focus soit positionné sur chacune de la pluralité de zones incluses dans un écran d'application au dernier point temporel en recevant les écrans d'application pour la pluralité de points temporels et au moins une action primitive effectuée avant un dernier point.

14. Dispositif électronique (2000) pour analyser un écran d'application (510), le dispositif électronique (2000) comprenant :
une mémoire (2300) stockant une ou plusieurs instructions ; et
au moins un processeur (2400) configuré pour exécuter au moins une instruction stockée dans la mémoire (2300),
dans lequel le au moins un processeur (2400) est configuré pour :
générer une pluralité de liens pour une pluralité d'éléments d'interface utilisateur (UI) (511-1, 511-2, 511-3) inclus dans l'écran d'application (510) ;
générer une carte UI (450) pour chacune d'au moins une action primitive (340), qui est une entrée utilisateur pour naviguer sur l'écran d'application (510), sur la base de la pluralité de liens ; et
identifier des positions (460-1, 460-2) d'un focus indiquant des éléments UI avec lesquels un utilisateur est pour but d'interagir parmi la pluralité d'éléments UI (511-1, 511-2, 511-3), et
dans lequel la carte UI (450) comprend une route via laquelle les positions (460-1, 460-2) du focus se déplacent entre la pluralité d'éléments UI (511-1, 511-2, 511-3) par l'au moins une action primitive (340).

15. Support de stockage lisible par ordinateur a enregistré au-dedans un programme informatique, qui, une fors exécuté par un processeur, effectuer le procédé selon l'une quelconque des revendications 1 à 13.
